# EUROPEAN PATENT SPECIFICATION

(11) **EP 4 091 363 B1**
(45) Date of publication and mention of the grant of the patent: **26.06.2024**
(21) Application number: 21707823.7
(22) Date of filing: 22.01.2021
(51) Int. Cl.: H04W 36/00, H04W 76/15, H04W 88/04, H04W 36/08

(54) **SECONDARY CELL-USER EQUIPMENT HANDOVERS**
WEITERREICHEN VON SEKUNDÄREN ZELLENBENUTZERAUSRÜSTUNGEN
TRANSFERTS INTERCELLULAIRES D'ÉQUIPEMENT UTILISATEUR DE CELLULE SECONDAIRE

(30) Priority: 31.01.2020 US 202062968926 P
(43) Date of publication of application: 23.11.2022
(73) Proprietor: Google LLC, Mountain View, CA 94043 (US)
(72) Inventor: WANG, Jibing, Mountain View, California 94043 (US); STAUFFER, Erik Richard, Mountain View, California 94043 (US)
(74) Representative: Marks & Clerk GST
(86) International application number: PCT/US2021/014571
(87) International publication number: WO 2021/154595

(56) References cited:
- US-A1- 2017 181 044
- US-A1- 2018 049 083
- US-A1- 2020 029 389

## Description

### BACKGROUND

Generally, a base station manages wireless connections with user equipment (UE) that are connected to a wireless network for data or network access. The base station typically determines configurations for the wireless connections, such as bandwidth and timing for a wireless connection by which a UE accesses the wireless network.

The latency of the network links between the UE, base station, and other network entities can slow communication through the network as data traverses each network entity before reaching a destination. For example, data communicated between two UEs may travel from one UE through a base station and core network before reaching another base station and the other UE, resulting in network latency. Several solutions have been developed to improve network latency. However, with recent advancements in wireless communication systems, such as Fifth Generation New Radio (5G NR), new approaches may be available.

US 2020/029389 A1 relates to Dual Connectivity (DC) for a wireless device in a wireless communication network. This document mentions MR-DC with a 5G Core Network, and states that inter-MN handover with/without MN initiated SN change is used to transfer UE context data from a source MN to a target MN while the UE context at the SN is kept or moved to another SN.

US 2018/049083 A1 relates to an apparatus for wireless communication that includes a processing system. The processing system is configured to establish a first radio link with a master base station, establish a second radio link with a first cell associated with a secondary base station, wherein the second radio link comprises a SRB, and receive a RRC connection reconfiguration signal from the second radio link SRB to establish the second radio link with a second cell. This document also relates to a change of secondary base station call-flow.

US 2017/181044 A1 relates to a method, base station, and dual connectivity system for providing service to handover of a user equipment.

### SUMMARY

In accordance with the invention, there is provided: a method performed by a first user equipment configured as a source secondary cell-user equipment for a first base station-user equipment dual connectivity group, as recited by claim 1; a method performed by a user equipment operating in a first base station-user equipment dual connectivity group, as recited by claim 7; a user equipment, as recited by claim 12; a method performed by a base station, as recited by claim 13; and a base station apparatus, as recited by claim 15.

This document describes techniques and apparatuses for secondary cell-user equipment (SC-UE) handovers. In aspects, a base station provides, as a primary cell, primary cell services to a first group of user equipments (UEs) in a first base station-user equipment dual connectivity (BUDC) group. Meanwhile, a first secondary cell-user equipment (SC-UE) provides a first secondary cell to the first BUDC group. In implementations, the base station determines to move a first UE from the first BUDC group to a second BUDC group, where a second SC-UE provides a second secondary cell to a second BUDC group. In various implementations, to move the first UE from the first BUDC group to the second BUDC group, the base station determines to perform an SC-UE handover that disconnects the first UE from the first SC-UE and connects the first UE to the second SC-UE. The base station directs the first SC-UE to release the first UE from the first BUDC group and, in some scenarios, directs the first UE to connect to the second SC-UE. The base station then communicates, as the primary cell, control-plane information or user-plane data with one or more UEs in the first group of UEs that remain in the first BUDC group.

In aspects, a first user equipment (UE) configured as a first secondary cell-user equipment (SC-UE) for a first base station-user equipment dual connectivity (BUDC) group provides a first secondary cell to a first group of UEs in the first BUDC group. The first UE determines to move, from the first BUDC group and to a second BUDC group, a third UE from the first group of UEs, where the second BUDC group includes a second UE configured as a second SC-UE that provides a second secondary cell to a second group of UEs. The first UE receives an indication to release the third UE from the first BUDC group and releases the third UE from the first BUDC group. The first UE provides the first secondary cell to one or more UEs that remain in the first BUDC group.

In aspects, a UE operating in a first BUDC group communicates in the first BUDC group using one or more air interface resources assigned to the UE by a first SC-UE that provides a first secondary cell to the first BUDC group. The UE receives an SC-UE handover command that directs the UE to disconnect from the first SC-UE and connect to a second SC-UE that provides a second secondary cell to a second BUDC group. The UE then disconnects from the first SC-UE and connects to the second SC-UE. In response to connecting to the second SC-UE, the UE communicates in the second BUDC group using one or more air interface resources assigned to the UE by the second SC-UE.

The details of one or more implementations of secondary cell-user equipment handovers are set forth in the accompanying drawings and the following description. Other features and advantages will be apparent from the description and drawings, and from the claims. This summary is provided to introduce subject matter that is further described in the Detailed Description and Drawings. Accordingly, this summary should not be considered to describe essential features nor used to limit the scope of the claimed subject matter.

### BRIEF DESCRIPTION OF THE DRAWINGS

The details of one or more aspects of secondary cell-user equipment handovers are described below. The use of the same reference numbers in different instances in the description and the figures indicate similar elements:
FIG. 1 illustrates an example operating environment in which various aspects of secondary cell-user equipment handovers can be implemented.
FIG. 2 illustrates an example device diagram of network entities that can implement various aspects of secondary cell-user equipment handovers.
FIG. 3 illustrates an example air interface resource that extends between a user equipment and/or a base station and with which various aspects of secondary cell-user equipment handovers can be implemented.
FIG. 4 illustrates an example environment in which a base station-user equipment dual connectivity group is implemented in accordance with one or more aspects.
FIGs. 5A and 5B illustrate an example of data and control transactions between a base station and user equipment of a base station-user equipment dual connectivity group in accordance with one or more aspects.
FIG. 6 illustrates an example of transactions between a secondary cell-user equipment and other user equipment to form a base station-user equipment dual connectivity group in accordance with one or more aspects.
FIG. 7 illustrates an example environment in which secondary cell-user equipment handovers are implemented in accordance with one or more aspects.
FIG. 8 illustrates an example environment in which secondary cell-user equipment handovers are implemented in accordance with one or more aspects.
FIG. 9 illustrates an example of a signaling and control transaction diagram between various network devices to secondary cell-user equipment handovers in accordance with one or more aspects.
FIG. 10 illustrates an example of a signaling and control transaction diagram between various network devices to secondary cell-user equipment handovers in accordance with one or more aspects.
FIGs. 11A and 11B illustrate examples of a signaling and control transaction diagram between various network devices to perform secondary cell-user equipment handovers in accordance with one or more aspects.
FIG. 12 illustrates an example method for performing secondary cell-user equipment handovers in accordance with one or more aspects.
FIG. 13 illustrates an example method for performing secondary cell-user equipment handovers in accordance with one or more aspects.
FIG. 14 illustrates an example method for performing secondary cell-user equipment handovers in accordance with one or more aspects.

### DETAILED DESCRIPTION

The following paragraphs describe embodiments, aspects and examples that are not specifically claimed but may be useful for understanding the invention.

In conventional wireless communication systems, latency of the network links between the UE, base station, and other network entities can slow communication through the network as data traverses various links between each network entity before reaching a destination. For example, data communicated between two UEs may travel from one UE through a base station and core network before reaching the other UE, resulting in network latency. For time-sensitive communications, such as telemetry information, sensor data, or other real-time application data, this network-related latency can degrade performance of the applications that rely on the timing of these communications.

A base station-user equipment dual connectivity (BUDC) group includes at least two UEs that communicate through a secondary connection (e.g., a radio access technology (RAT) connection), such as to communicate data packets through a secondary cell provided by one of the UEs. In other words, a base station provides a primary cell to multiple UEs included in a BUDC group, and the multiple UEs of the BUDC group communicate through a secondary cell provided by one of the UEs included in the BUDC group. Because the data is communicated with or through the secondary cell-UE of the BUDC group (thereby avoiding base stations and core network), the secondary cell enables low-latency communication among the UEs of the BUDC group.

For example, a base station serving as a primary cell can form a BUDC group by configuring a user equipment as a secondary cell-user equipment (SC-UE) to provide a secondary cell. The base station can also grant or assign resources of an air interface for use by the SC-UE to schedule communications of UEs assigned to the BUDC group. The base station or SC-UE can then add other UEs to the BUDC group to enable the other UEs to communicate with the SC-UE through the secondary cell. By so doing, the SC-UE can communicate data directly with the other UEs of the BUDC group without communicating through a base station, which decreases latency of communications between the UEs of the BUDC group. As another example, consider UEs configured as respective vehicle computing systems which can be added to a BUDC group to enable low-latency communication among the UEs. Using the secondary cell of the BUDC group, the UEs can communicate directly (*e.g.,* with the SC-UE or relayed through the SC-UE) to share time-sensitive information, such as sensor data or telemetry information, without the latency typically associated with the primary cell and other network entities of a wireless network.

The mobility and flexible configuration of UEs included in a BUDC group produce a dynamic operating environment, which can impact the quality of communications exchanged using the BUDC group. To illustrate, when forming a BUDC group, the base station may select a UE to include in the BUDC group based on various characteristics of the UE, such as UE location, signal strength, a use profile of the UE (*e.g*., vehicle-based, sensor-enabled, user-based, and so on), an application of a UE (*e.g*., application layer communications with other UEs), a location of the UE, a proximity of the UE relative to a secondary cell-user equipment (SC-UE) in the BUDC group, or a mobility state (*e.g.,* high-mobility, medium-mobility, low-mobility, and/or normal-mobility state) of the UE. At a later point in time these characteristics can change, thus altering the operating environment and potentially impacting an operating performance (*e.g*., bit error rates, signal quality and/or latency) of the BUDC group. For instance, a base station may initially include a UE within a predefined distance to an SC-UE. Over time, the UE may move away from the SC-UE to a location outside the predefined distance. In some scenarios, the base station can improve the operating performance (*e.g*., lower bit error rates, higher signal quality and/or lower latency) by removing the UE from a first BUDC group, such as by performing an SC-UE handover of the UE to another SC-UE and/or second BUDC group.

The following paragraphs are related to claimed embodiments.

In aspects, a base station provides, as a primary cell, primary cell services to a first group of user equipments (UEs) in a first base station-user equipment dual connectivity (BUDC) group. In implementations, the base station determines to perform an SC-UE handover that disconnects a first UE from a first secondary cell-user equipment (SC-UE) that provides a first secondary cell to the first BUDC group and connects the first UE to a second SC-UE that provides a second secondary cell to a second BUDC group. The base station directs the first SC-UE to release the first UE from the first BUDC group, and communicates, as the primary cell, control-plane information or user-plane data with one or more UEs in the first group of UEs that remain in the first BUDC group.

In aspects, a first user equipment (UE) configured as a first secondary cell-user equipment (SC-UE) for a first base station-user equipment dual connectivity (BUDC) group provides a first secondary cell to a first group of UEs in the first BUDC group. The first UE determines to move, from the first BUDC group and to a second BUDC group, a third UE from the first group of UEs, where the second BUDC group includes a second UE configured as a second SC-UE that provides a second secondary cell to a second group of UEs. The first UE receives an indication to release the third UE from the first BUDC group and releases the third UE from the first BUDC group. The first UE provides the first secondary cell to one or more UEs that remain in the first BUDC group.

In aspects, a UE operating in a first BUDC group communicates in the first BUDC group using one or more air interface resources assigned to the UE by a first SC-UE that provides a first secondary cell to the first BUDC group. The UE receives an SC-UE handover command that directs the UE to disconnect from the first SC-UE and connect to a second SC-UE that provides a second secondary cell to a second BUDC group. The UE then disconnects from the first SC-UE and connects to the second SC-UE. In response to connecting to the second SC-UE, the UE communicates in the second BUDC group using one or more air interface resources assigned to the UE by the second SC-UE.

In some aspects, a method performed by a UE configured as a secondary cell-user equipment (SC-UE) for a BUDC group includes receiving, from a base station serving as a primary cell, configuration information for the BUDC group. The method also includes admitting another UE associated with the base station to the BUDC group. The UE schedules, for the other UE, resources of an air interface for communication in a secondary cell provided by the UE for the BUDC group. The UE then communicates data with the other UE of the BUDC group using the scheduled resources of the air interface for communication in the secondary cell.

### Example Environments

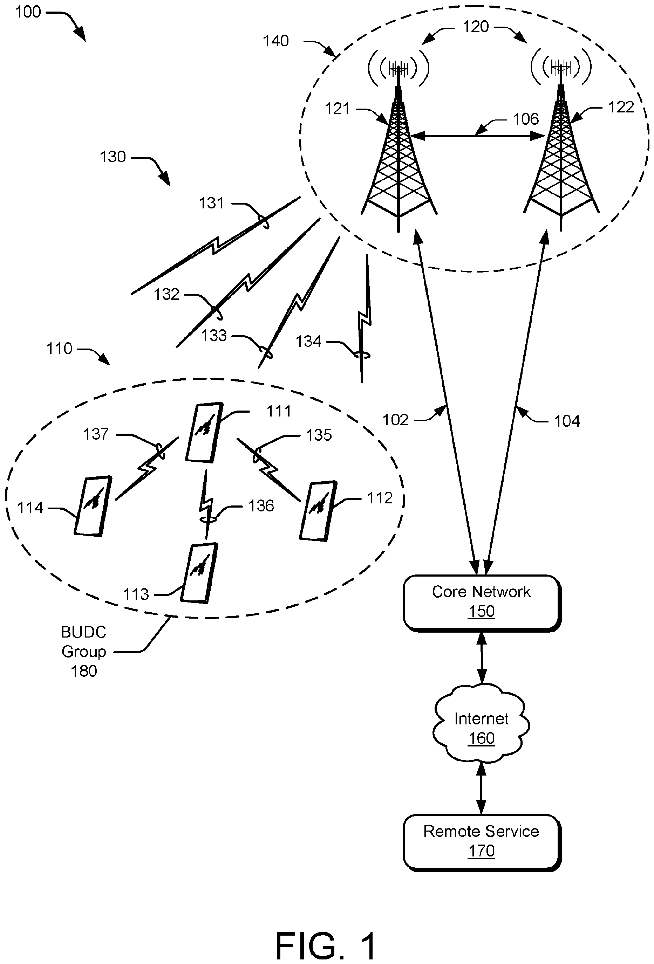

FIG. 1 illustrates an example operating environment 100 in which various aspects of secondary cell-user equipment handovers can be implemented. Generally, the example environment 100 includes multiple user equipment 110 (UE 110), illustrated as UE 111, UE 112, UE 113, and UE 114 of a base station-user equipment dual connectivity (BUDC) group 180. The example environment 100 also includes base stations 120 (illustrated as base station 121 and base station 122). Each UE 110 of the BUDC group 180 can communicate with a base station acting as a primary cell for the BUDC group. For example, base station 121 acts as a primary cell for the BUDC group 180 and communicates with the UE 110 through wireless communication links 130 (wireless link 130). The wireless link 130 can include a respective wireless link to each UE in the BUDC group 180, such as wireless link 131, wireless link 132, wireless link 133, and wireless link 134. Each UE 110 in the BUDC group 180 can also communicate with other UEs of the BUDC group through one or more wireless communication links which are illustrated as wireless links 135, 136, and 137. In some aspects, the wireless links 130 (that can include wireless links 135, 136, and 137) are implemented as a radio access technology connection (*e.g*., Fifth Generation (5G) or Sixth Generation (6G)) through licensed, unlicensed, or shared-frequency spectrum, such as Citizens Band Radio Service (CBRS). The wireless links 130 may enable data-plane (or user-plane) communications among the UE 110 of the BUDC group, such as data packet traffic or communication across packet data convergence protocol (PDCP), radio link control (RLC), and medium access control (MAC) layers of the user-plane (*e.g.*, up to layer-2).

Alternatively or additionally, a UE 110 of a BUDC group 180 can also communicate with another UE 110 through other wireless connections, such as local wireless network connections (not shown). The local wireless network connections of the UEs 110 can be implemented as any suitable type of wireless connection or link, such as a millimeter wave (mmWave) link, sub-millimeter wave (sub-mmWave) link, free space optical (FSO) link, wireless local access network (WLAN), wireless personal area network (WPAN), near-field communication (NFC), Bluetooth^{™}, ZigBee^{™}, radar, lidar, sonar, ultrasonic, or the like. In some aspects, the UE 110 of the BUDC group 180 can discover, identify, or add a candidate UE 110 to the BUDC by communicating with the candidate UE through a local wireless network connection (*e.g*., WLAN or Bluetooth^{™}).

In this example, the UE 110 is implemented as a smartphone. Although illustrated as a smartphone, the UE 110 may be implemented as any suitable computing or electronic device, such as a smart watch, mobile communication device, modem, cellular phone, gaming device, navigation device, media device, laptop computer, desktop computer, tablet computer, smart appliance, vehicle-based communication system, vehicle telemetry system, traffic monitoring/control equipment, an Internet-of-things (IoT) device (*e.g*., sensor node, controller/actuator node, combination thereof), and the like. The base stations 120 (*e.g.,* an Evolved Universal Terrestrial Radio Access Network Node B, E-UTRAN Node B, evolved Node B, eNodeB, eNB, Next Generation Node B, gNode B, gNB, or the like) may be implemented in a primary cell, macrocell, microcell, small cell, picocell, or the like, or any combination thereof.

In some aspects, a base station acting as a primary cell (*e.g.,* base station 121) selects UEs 110 and provides configuration information to the UEs 110 in order to establish the BUDC group 180. The base station can also manage membership of the BUDC group (*e.g.,* add or remove UEs) or grant resources to the BUDC group to enable wireless links between the UEs 110. For example, the base station 120 can assign or grant (*e.g.*, semi-persistent scheduling) resources of an air interface to a secondary cell-user equipment (SC-UE) of the BUDC that provides a secondary cell for communication among the UEs of the BUDC group. The SC-UE can then schedule, from the assigned resources, uplink or downlink resources for the UEs of the BUDC group to communicate within the secondary cell.

The base station 121 communicates with the UE 110 through the wireless links 130, which may be implemented as any suitable type of wireless link. The wireless links 130 include control and data communication, such as downlink of data and control information communicated from the base station 121 to the UE 110, uplink of other data and control information communicated from the UE 110 to the base station 121, or both. The wireless links 130 may include one or more wireless links (*e.g*., radio links) or bearers implemented using any suitable communication protocol or standard, or combination of communication protocols or standards, such as 3rd Generation Partnership Project Long-Term Evolution (3GPP LTE), Fifth Generation New Radio (5GNR), Sixth Generation (6G), and so forth. Multiple wireless links 130 may be aggregated in a carrier aggregation to provide a higher data rate for the UE 110. Multiple wireless links 130 from multiple base stations 120 may be configured for Coordinated Multipoint (CoMP) communication with the UE 110. Additionally, multiple wireless links 130 may be configured for single-RAT dual connectivity or multi-RAT dual connectivity (MR-DC). Each of these various multiple-link situations tends to increase the power consumption of the UE 110.

The base stations 120 are collectively a Radio Access Network 140 (*e.g.*, RAN, Evolved Universal Terrestrial Radio Access Network, E-UTRAN, 5G NR RAN or NR RAN). The base stations 121 and 122 in the RAN 140 are connected to a core network 150. The base stations 121 and 122 connect, at 102 and 104 respectively, to the core network 150 through an NG2 interface for control-plane signaling and using an NG3 interface for user-plane data communications when connecting to a 5G core network, or using an S 1 interface for control-plane signaling and user-plane data communications when connecting to an Evolved Packet Core (EPC) network. The base stations 121 and 122 can communicate using an Xn Application Protocol (XnAP) through an Xn interface, or using an X2 Application Protocol (X2AP) through an X2 interface, at 106, to exchange user-plane and control-plane data. The user equipment 110 may connect, via the core network 150, to public networks, such as the Internet 160 to interact with a remote service 170.

### Example Devices

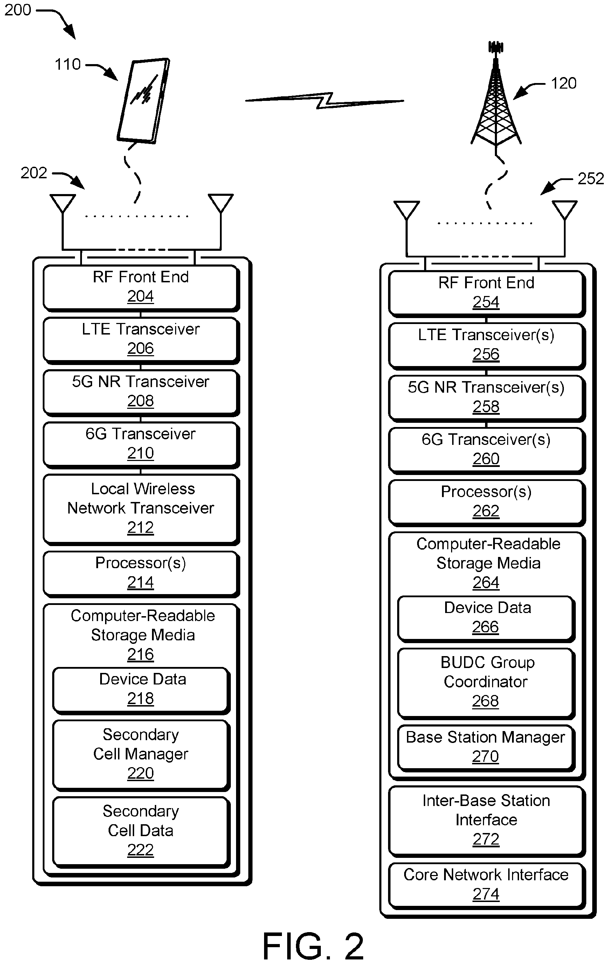

FIG. 2 illustrates an example device diagram 200 of the user equipment 110 and base stations 120. Generally, the device diagram 200 describes network entities that can implement various aspects of secondary cell-user equipment handovers. FIG. 2 shows respective instances of the UEs 110 and the base stations 120. The UEs 110 or the base stations 120 may include additional functions and interfaces that are omitted from FIG. 2 for the sake visual brevity. The UE 110 includes antennas 202, a radio frequency front end 204 (RF front end 204), and radio-frequency transceivers that include an LTE transceiver 206, a 5G NR transceiver 208, and/or a 6G transceiver 210 for communicating with other UEs 110, base stations 120 in the 5G RAN 141, and/or the E-UTRAN 142. The UE 110 includes one or more additional transceivers (*e.g*., local wireless network transceiver 212) for communicating over one or more local wireless networks (*e.g.*, WLAN, WPAN, Bluetooth^{™}, NFC, Wi-Fi-Direct, IEEE 802.15.4, ZigBee, Thread, mmWave, sub-mmWave, FSO, radar, lidar, sonar, ultrasonic) with at least one other UE of the BUDC group. The RF front end 204 of the UE 110 can couple or connect the LTE transceiver 206, the 5G NR transceiver 208, the 6G transceiver 210, and the local wireless network transceiver 212 to the antennas 202 to facilitate various types of wireless communication.

The antennas 202 of the UE 110 may include an array of multiple antennas that are configured similar to or differently from each other. The antennas 202 and the RF front end 204 can be tuned to, and/or be tunable to, one or more frequency bands defined by the 3GPP LTE and 5G NR communication standards and implemented by the LTE transceiver 206, and/or the 5G NR transceiver 208. Additionally, the antennas 202, the RF front end 204, the LTE transceiver 206, the 5G NR transceiver 208, and/or the 6G transceiver 210 may be configured to support beamforming for the transmission and reception of communications with the base stations 120. By way of example and not limitation, the antennas 202 and the RF front end 204 can be implemented for operation in sub-gigahertz bands, sub-6 GHz bands, and/or above 6 GHz bands that are defined by the 3GPP LTE and 5G NR communication standards (*e.g*., 57-64 GHz, 28 GHz, 38 GHz, 71 GHz, 81 GHz, or 92 GHz bands). In addition, the RF front end 204 can be tuned to, and/or be tunable to, one or more frequency bands defined and implemented by the local wireless network transceiver 212 to support transmission and reception of communications with other UEs in the BUDC group over a local wireless network.

The UE 110 includes sensors (not shown) that can be implemented to detect various properties such as temperature, orientation, acceleration, proximity, distance, supplied power, power usage, battery state, or the like. As such, the sensors of the UE 110 may include any one or a combination of accelerometers, gyros, depth sensors, distance sensors, temperature sensors, thermistors, battery sensors, and power usage sensors. In various aspects, the UE 110 can collect and share data (*e.g.,* vehicle telemetry) from sensors with another UE of the BUDC group, such as a secondary cell-user equipment that is configured to provide the secondary cell for the BUDC group.

The UE 110 also includes processor(s) 214 and computer-readable storage media 216 (CRM 216). The processor 214 may be a single core processor or a multiple core processor implemented with a homogenous or heterogeneous core structure. The computer-readable storage media described herein excludes propagating signals. CRM 216 may include any suitable memory or storage device such as random-access memory (RAM), static RAM (SRAM), dynamic RAM (DRAM), non-volatile RAM (NVRAM), read-only memory (ROM), or Flash memory useable to store device data 218 of the UE 110. The device data 218 includes user data, multimedia data, beamforming codebooks, applications, and/or an operating system of the UE 110, which are executable by processor(s) 214 to enable user-plane communication, control-plane signaling, and user interaction with the UE 110.

In aspects of secondary cell-user equipment handovers, the CRM 216 of the UE 110 may also include a secondary cell manager 220 and secondary cell data 222. Alternatively or additionally, the secondary cell manager 220 may be implemented in whole or part as hardware logic or circuitry integrated with or separate from other components of the UE 110. Generally, the secondary cell manager 220 of the UE 110 can form or manage a BUDC group of UEs 110 for which the UE 110 provides a secondary cell. A base station 120, serving a primary cell to which the UE 110 is associated, can assign or grant the secondary cell manager 220 resources of an air interface for use in the secondary cell. The secondary cell manager 220 can then schedule the resources of the air interface for use by the UEs 110 of the BUDC group to communicate in the secondary cell. In aspects, secondary cell-user equipment facilitates data-plane communication for the UEs 110 of the BUDC group through this secondary cell.

The secondary cell data 222 may include data received from other UEs 110 of the BUDC group, which may be transmitted to the base station 120 or another UE 110 of the BUDC group. For example, a UE serving as a secondary cell-user equipment (e.g., UE 111, UE 112, UE 113) can receive, aggregate, forward, and/or route data packets among the UEs 110 of the BUDC group through the secondary cell to enable low-latency communication. With respect to the primary cell, the base station 120 provides control-plane signaling or information and data-plane (or user-plane) communication to one or more of the UEs through a connection with the primary cell. Alternatively or additionally, the secondary cell manager 220 may use the local wireless network transceiver 212 to discover or add other UEs to the BUDC group. The implementations and uses of the secondary cell manager 220 vary and are described throughout the disclosure.

Aspects and functionalities of the UE 110 may be managed by operating system controls presented through an application programming interface (API). In some aspects, the secondary cell manager 220 accesses an API or an API service of the UE 110 to control aspects and functionalities of the user equipment or transceivers thereof. For example, the secondary cell manager 220 can access or utilize the LTE transceiver 206, 5G NR transceiver 208, 6G transceiver 210, or local wireless network transceiver 212 to coordinate with a base station 120 or other UEs 110 to form and manage a BUDC group for which the UE 110 provides a secondary cell for low-latency communication. The CRM 216 may also include a communication manager (not shown) to manage or provide an interface for communicative functions of the UE 110. The communication manager may also be implemented in whole or part as hardware logic or circuitry integrated with or separate from other components of the UE 110. In at least some aspects, the communication manager configures the RF front end 204, the LTE transceiver 206, the 5G NR transceiver 208, 6G transceiver 210, and/or the local wireless network transceiver 212 to implement the techniques of dual connectivity with secondary cell-user equipment as described herein.

The device diagram for the base stations 120, shown in FIG. 2, includes a single network node (*e.g.,* a gNode B). The functionality of the base stations 120 may be distributed across multiple network nodes or devices and may be distributed in any fashion suitable to perform the functions described herein. The base stations 120 include antennas 252, a radio frequency front end 254 (RF front end 254), one or more LTE transceivers 256, one or more 5G NR transceivers 258, and/or one or more 6G transceivers 260 for communicating with the UE 110. The RF front end 254 of the base stations 120 can couple or connect the LTE transceivers 256, the 5G NR transceivers 258, and the 6G transceivers 260 to the antennas 252 to facilitate various types of wireless communication. The antennas 252 of the base stations 120 may include an array of multiple antennas that are configured similar to or differently from each other. The antennas 252 and the RF front end 254 can be tuned to, and/or be tunable to, one or more frequency band defined by the 3GPP LTE and 5G NR communication standards, and implemented by the LTE transceivers 256, the 5G NR transceivers 258, and/or the 6G transceivers 260. Additionally, the antennas 252, the RF front end 254, the LTE transceivers 256, the 5G NR transceivers 258, and/or 6G transceivers 260 may be configured to support beamforming, such as Massive-MIMO, for the transmission and reception of communications with any UE 110 in a BUDC group through a primary cell (*e.g.*, cell provided by the base station 120).

The base stations 120 also include processor(s) 262 and computer-readable storage media 264 (CRM 264). The processor 262 may be a single core processor or a multiple core processor composed of a variety of materials, such as silicon, polysilicon, high-K dielectric, copper, and so on. CRM 264 may include any suitable memory or storage device such as random-access memory (RAM), static RAM (SRAM), dynamic RAM (DRAM), non-volatile RAM (NVRAM), read-only memory (ROM), or Flash memory useable to store device data 266 of the base stations 120. The device data 266 includes network scheduling data, radio resource management data, beamforming codebooks, applications, and/or an operating system of the base stations 120, which are executable by processor(s) 262 to enable communication with the UE 110.

In aspects, the CRM 264 of the base station 120 also includes a base station-user equipment dual connectivity (BUDC) group coordinator 268 for forming and managing BUDC groups of UEs 110. Alternatively or additionally, the BUDC group coordinator 268 may be implemented in whole or part as hardware logic or circuitry integrated with or separate from other components of the base station 120. Generally, the BUDC group coordinator 268 enables the base station 120 to establish a BUDC group of UEs 110, manage resources allocated to the BUDC group for a secondary cell, and manage UE membership of the BUDC group, such as by adding or removing UEs 110 from the BUDC group (or secondary cell). For example, the BUDC group coordinator can send layer-3 messages to the SC-UE or a potential UE group member to configure, add, or remove that specific UE into or from the secondary cell of the BUDC group.

The BUDC group coordinator 268 of the base station 120 may also enable or configure a local wireless network connection between the UEs 110 of the BUDC group, such as to facilitate sharing of BUDC group information, encryption keys, resource scheduling information, or the like. For example, the BUDC group coordinator 268 may configure a local wireless network connection that is available for multiple UEs 110 of the BUDC group and then provide an indication of the configuration (*e.g.*, channel, frequency, or network identifier) to at least one of the UEs 110. By so doing, a UE acting as a SC-UE can coordinate resources or access to the secondary cell of the BUDC group through local wireless network connections with the other UEs.

CRM 264 also includes a base station manager 270. Alternatively or additionally, the base station manager 270 may be implemented in whole or part as hardware logic or circuitry integrated with or separate from other components of the base stations 120. In at least some aspects, the base station manager 270 configures the LTE transceivers 256, 5G NR transceivers 258, and 6G transceiver 260 for communication with the UE 110, as well as communication with a core network. The base stations 120 include an inter-base station interface 272, such as an Xn and/or X2 interface, which the base station manager 270 configures to exchange user-plane and control-plane data between another base station 120, to manage the communication of the base stations 120 with the UE 110. The base stations 120 include a core network interface 274 that the base station manager 270 configures to exchange user-plane and control-plane data with core network functions and/or entities.

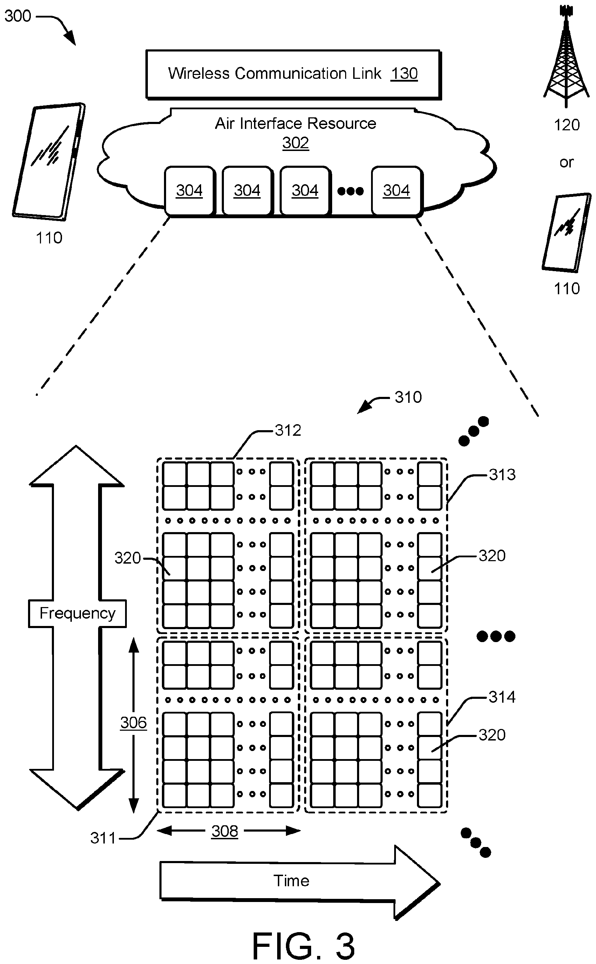

FIG. 3 illustrates an air interface resource at 300 that extends between user equipment and/or a base station through which various aspects dual connectivity with secondary cell-user equipment can be implemented. The air interface resource 302 may utilize licensed, unlicensed, or shared license radio spectrum (*e.g*., CBRS), in multiple frequency bands, to enable wireless links between UEs (secondary cell) or with a base station (primary cell) in accordance with 5G, 6G, or other communication standards. In aspects, a base station may grant or allocate a set of resources (*e.g.,* through semi-persistent scheduling) to a SC-UE to be used for communications of a BUDC group secondary cell. For example, a SC-UE providing a secondary cell can schedule resources for other UEs of the BUDC group. Accordingly, granted resources or scheduled resources described herein may refer to frequency, time, or units of resources for an air interface, such as the air interface resource 302 described with reference to FIG. 3.

The air interface resource 302 can be divided into resource units 304, each of which occupies some intersection of frequency spectrum and elapsed time. A portion of the air interface resource 302 is illustrated graphically in a grid or matrix having multiple resource blocks 310, including example resource blocks 311, 312, 313, 314. An example of a resource unit 304 therefore includes at least one resource block 310. As shown, time is depicted along the horizontal dimension as the abscissa axis, and frequency is depicted along the vertical dimension as the ordinate axis. The air interface resource 302, as defined by a given communication protocol or standard, may span any suitable specified frequency range, and/or may be divided into intervals of any specified duration. Increments of time can correspond to, for example, milliseconds (mSec). Increments of frequency can correspond to, for example, megahertz (MHz).

In example operations generally, the base stations 120 allocate portions (*e.g*., resource units 304) of the air interface resource 302 for uplink and downlink communications. In aspects of dual connectivity, an SC-UE may also schedule resources of the air interface for UEs of the BUDC group for communication in a secondary cell. Alternatively or additionally, a base station can provide control-plane signaling to configure and manage wireless links of the secondary cell. Each resource block 310 of network access resources may be allocated to support respective wireless communication links 130 of multiple user equipment 110. In the lower left corner of the grid, the resource block 311 may span, as defined by a given communication protocol, a specified frequency range 306 and comprise multiple subcarriers or frequency sub-bands. The resource block 311 may include any suitable number of subcarriers (*e.g*., 12) that each correspond to a respective portion (*e.g.,* 15 kHz) of the specified frequency range 306 (*e.g.,* 180 kHz). The resource block 311 may also span, as defined by the given communication protocol, a specified time interval 308 or time slot (*e.g*., lasting approximately one-half millisecond or 7 orthogonal frequency-division multiplexing (OFDM) symbols). The time interval 308 includes subintervals that may each correspond to a symbol, such as an OFDM symbol. As shown in FIG. 3, each resource block 310 may include multiple resource elements 320 (REs) that correspond to, or are defined by, a subcarrier of the frequency range 306 and a subinterval (or symbol) of the time interval 308. Alternatively, a given resource element 320 may span more than one frequency subcarrier or symbol. Thus, a resource unit 304 may include at least one resource block 310, at least one resource element 320, and so forth.

In example implementations, user equipments 110 (one of which is shown) are communicating with the base stations 120 (one of which is shown, *e.g*., primary cell) or another user equipment 110 (*e.g.*, secondary cell) through access provided by portions of the air interface resource 302. The base station manager 270 or secondary cell manager 220 (shown in FIG. 2) may determine a respective data-rate, type of information, or amount of information (*e.g.,* data or control information) to be communicated (*e.g.,* transmitted) by the user equipment 110. For example, the base station manager 270 (*e.g.* for the primary cell) or secondary cell manager 220 (*e.g.,* for the secondary cell) can determine that each user equipment 110 is to transmit at a different respective data rate or transmit a different respective amount of information. The base station manager 270 or secondary cell manager 220 then allocates one or more resource blocks 310 to user equipment 110 of the BUDC group based on the determined data rate or amount of information.

Additionally, or in the alternative to block-level resource grants, the base station manager 270 or secondary cell manager 220 may allocate resource units at an element-level. Thus, the base station manager 270 or secondary cell manager 220 may allocate one or more resource elements 320 or individual subcarriers to different user equipment 110. By so doing, one resource block 310 can be allocated to facilitate network access for multiple user equipment 110. Accordingly, the base station manager 270 or secondary cell manager 220 may allocate, at various granularities, one or up to all subcarriers or resource elements 320 of a resource block 310 to one user equipment 110 or divided across multiple user equipment 110, thereby enabling higher network utilization or increased spectrum efficiency.

The base station manager 270 or secondary cell manager 220 can therefore allocate air interface resource 302 by resource unit 304, resource block 310, frequency carrier, time interval, resource element 320, frequency subcarrier, time subinterval, symbol, spreading code, some combination thereof, and so forth. Based on respective allocations of resource units 304, the base station manager 270 can transmit respective messages to the multiple user equipment 110 indicating the respective allocation of resource units 304 to each user equipment 110. Each message may enable a respective user equipment 110 to queue the information or configure the LTE transceiver 206, the 5G NR transceiver 208, and/or the 6G transceiver 210 to communicate via the allocated resource units 304 of the air interface resource 302.

### Base Station-User Equipment Dual Connectivity Group

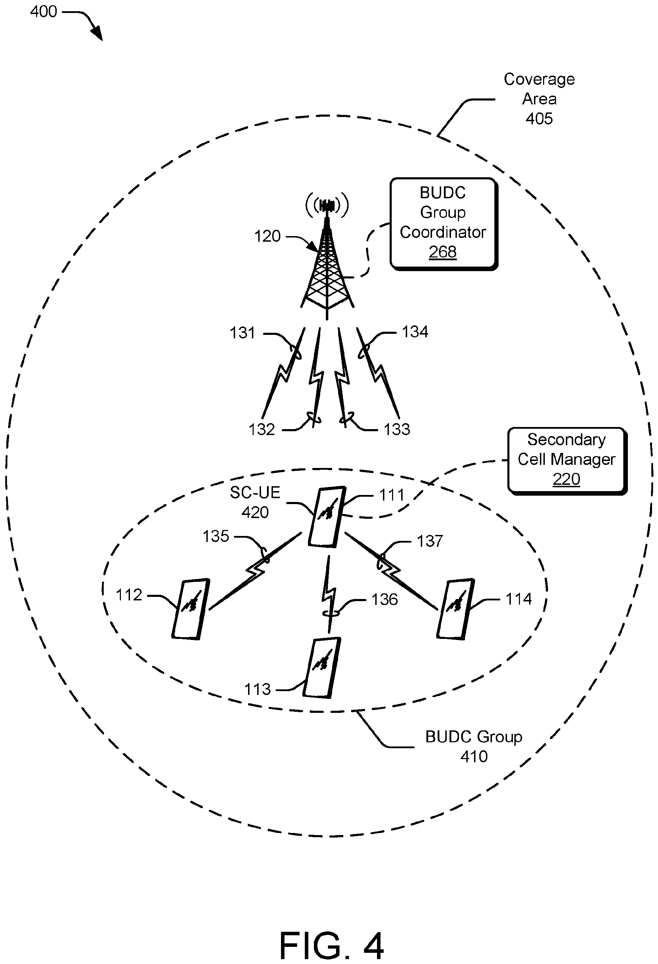

FIG. 4 illustrates an example environment at 400 in which a base station-user equipment dual connectivity (BUDC) group 410 is implemented in accordance with various aspects. In this example, connection with a radio access network is provided by the base station 120 as a primary cell (over coverage area 405) and respective connections with other UEs are provided by a SC-UE 420 acting as a secondary cell. In other words, each of the UEs may have dual connectivity to the radio access network through the base station 120 (or another base station) as a primary cell (or master cell) and/or to other UEs of the BUDC group 410 through the SC-UE 420 as the secondary cell.

In this example, assume that base station 120, as a primary cell, manages UEs 111 through 114 and maintains respective wireless links 131 through 134 of the primary cell to provide each UE connectivity to the radio access network. To form the BUDC group 410, the BUDC group coordinator 268 selects the UE 111 as the SC-UE 420 for the BUDC group. The BUDC group coordinator 268 of the base station 120 can then provide a semi-persistent scheduling (SPS) grant of resources to the SC-UE 420 for communication with other UEs 110 of the BUDC group 410. For example, the SC-UE 420 can schedule the granted resources to other UEs 110 (*e.g*., non-SC-UE UEs, subordinate UEs to the SC-UE) of the BUDC group 410 for uplink or downlink data traffic in the secondary cell of the SC-UE 420. By so doing, the SC-UE 420 can communicate data directly with the other UEs 110 of the BUDC group without communicating through the base station 120, which decreases the latency of communications among the UEs of the BUDC group. Using the secondary cell of the BUDC group, the UEs 110 can communicate directly within the BUDC group (*e.g*., with the SC-UE or relayed through the SC-UE) to share time-sensitive information, such as sensor data or telemetry information, without the latency typically associated with communicating using the primary cell and other network entities of a wireless network.

In some aspects of dual connectivity, the secondary cell manager 220 of the UE 420 can communicate with other UEs 110 of the BUDC in the secondary cell through the data-plane or layer-2 messages. As such, the base station 120 may provide control-plane signaling or information for respective connections to support dual connectivity with the primary cell of the base station 120 and secondary cell implemented by an SC-UE of the BUDC group. Accordingly, the base station 120 and secondary cell manager 220 of the UE 420 may negotiate or coordinate when adding, removing, or managing other UEs 110 of the BUDC group.

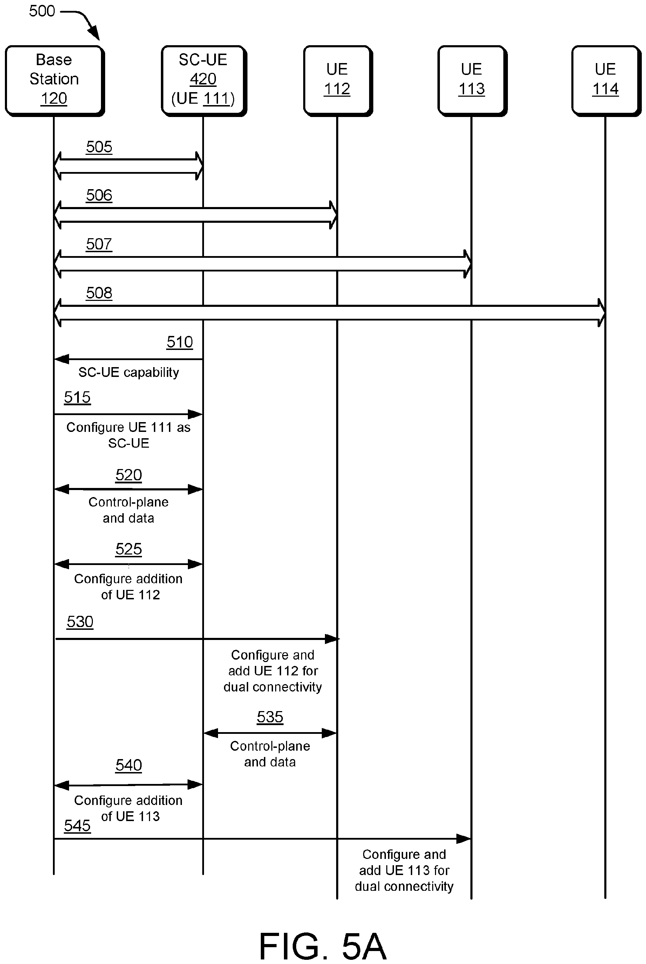

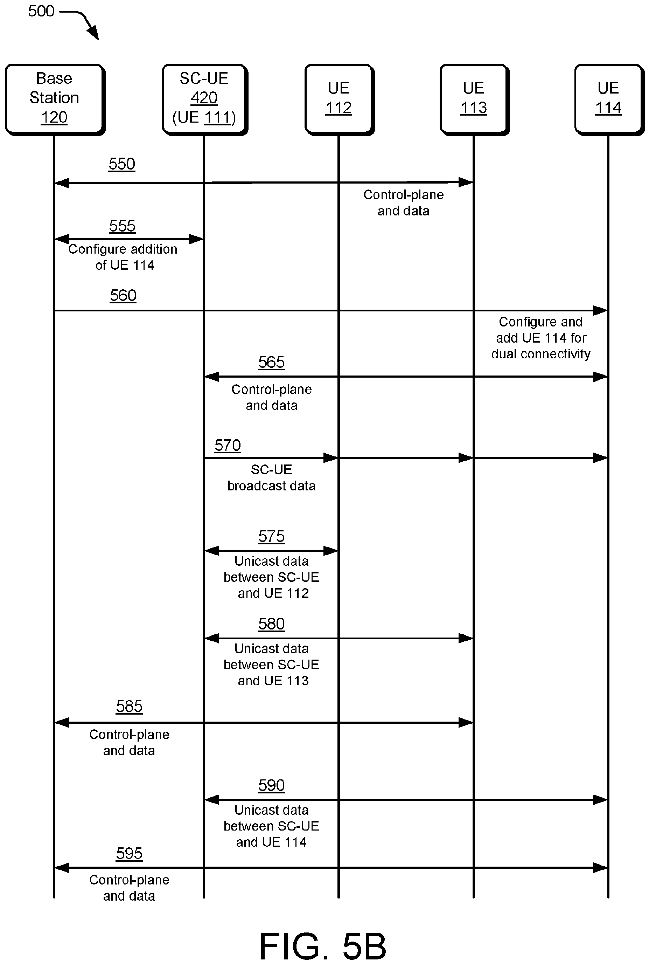

FIGs. 5A and 5B illustrate an example of data and control transactions 500 between a base station and user equipment configured as a SC-UE in accordance with aspects of dual connectivity with secondary cell-user equipment. The base station 120 and the UEs 111 through 114 may be implemented similar to the entities described with reference to FIGs. 1-4. Generally, the transactions of FIG. 5 are described in the context of the environment of FIG. 4 in which a base station 120 and SC-UE 420 provide dual connectivity through a primary cell and secondary cell, respectively. As such, the base station 120 and UE 111, configured as the SC-UE 420, may coordinate to form a BUDC group 410 in which the UEs 111 through 114 can communicate with the base station 120, or communicate through the SC-UE 420 for low-latency data communications among the UEs of the BUDC group.

At 505, the UE 111 operates with single connectivity to the base station 120. Similarly, at 506, the UE 112 operates with single connectivity to the base station 120, at 507, the UE 113, operates with single connectivity to the base station 120, and at 508, the UE 114 operates with single connectivity to the base station 120.

At 510, the UE 111 provides an indication to the base station 120 of capabilities to act or assume the role of SC-UE for a BUDC group 410. The indication of capabilities may include an indication of available battery power, available processing power, available memory for BUDC group data, or communication capabilities, such as a transceiver configuration or radio capabilities.

At 515, the base station 120 configures the UE 111 as the SC-UE 420 for the BUDC group 410. The base station 120 may also grant resources of an air interface to the SC-UE 420 for the BUDC group, such as through a semi-persistent scheduling grant or assignment of the resources. In some cases, the base station 120 sends a layer-3 message to configure the SC-UE 420 of the BUDC group. Alternatively or additionally, the base station 120 can provide an encryption key for use by the UEs of the BUDC group for secure communications in a secondary cell. Accordingly, at 520, the base station 120 and the SC-UE 420 can exchange control-plane information or user-plane data through the primary cell of the base station 120.

At 525, the base station 120 configures or negotiates, with the SC-UE 420, the addition of UE 112 to the BUDC group of the SC-UE. The base station can select the UE 112 for the BUDC group based on a use profile of the UE 112 (*e.g*., vehicle-based, sensor-enabled, user-based, and so on), an application of the UE 112 (*e.g*., application layer communications with other UEs), a location of the UE 112, a proximity of the UE 112 relative to the SC-UE, or a mobility state (*e.g*., high-mobility, medium-mobility, low-mobility, and/or normal-mobility state) of the UE. The base station 120 can send a message to the SC-UE 420 requesting addition of the UE 112 to the BUDC group, which the SC-UE 420 may accept or decline, such as when available power or processing resources are constrained or insufficient to support SC-UE duties. Here, assume that the SC-UE 420 accepts admission of the UE 112 to the BUDC group.

In implementations, prior to joining the BUDC group, the UE 112 operates in a single-connectivity mode that corresponds to a connection with the base station 120. This allows the base station 120 to identify the UE 112 as a candidate to join the BUDC group, such as based on receiving UE capabilities from the UE 112 that indicate dual-mode capabilities. Alternatively or additionally, the base station 120 collects location information about the UE 112, and identifies the UE 112 as a candidate based on location. As yet another example, the base station 120 determines a power remaining in the UE 112 based on the connection through an exchange of information. Thus, the single-connectivity mode of the UE 112 allows the base station to know the UE 112 exists and to determine whether the UE 112 is a candidate to join a BUDC group as further described.

At 530, the base station 120 configures the UE 112 for the BUDC group 410 and adds the UE 112 to the BUDC group for dual connectivity. In some aspects, the base station 120 sends a layer-3 (*e.g*., Service Data Adaptation Protocol layer) message to the UE 112 to direct or request the UE to join the BUDC group.

At 535, the SC-UE 420 and the UE 112 communicate with one another to establish connectivity for exchanging control-plane information or user-plane data through the secondary cell of the SC-UE 420. As one example, the UE 112 contacts the SC-UE 420 to request addition to the cell and/or BUDC group provided by the SC-UE 420. The SC-UE adds the UE 112 to the BUDC group and/or assigns air interface resources of the cell to the UE 112. In response to a successful addition, the SC-UE acknowledges back to the UE 112. Afterward, the SC-UE 420 and UE 112 exchange control plane and data-plane communications. As noted, the base station 120 can provide control-plane signaling and user-plane data for UEs of the BUDC group as the primary cell, and the SC-UE 420 can provide user-plane data communication for the UEs of the BUDC group as the secondary cell.

At 540, the base station 120 configures or negotiates, with the SC-UE 420, the addition of UE 113 to the BUDC group (or secondary cell) of the SC-UE. As described herein, the base station 120 can select UE 113 for addition to the BUDC group and request that the SC-UE accept the addition of the UE 113 to the BUDC group.

At 545, the base station 120 configures the UE 113 for the BUDC group 410 and adds the UE 113 to the BUDC group for dual connectivity. The base station 120 can send a layer-3 message to the UE 113 to configure the UE 113 and/or direct the UE to join the BUDC group.

Continuing to FIG. 5B, at 550, the SC-UE 420 and the UE 113 communicate with one another to establish connectivity for exchanging control-plane information or user-plane data through the secondary cell of the SC-UE 420. As one example, and similar to the communications exchanged at 535, the UE 113 requests addition to the group and the SC-UE 420 acknowledges a successful addition, which then enables the SC-UE 420 and the UE 113 to exchange control plane and data-plane communications.

At 555, the base station 120 configures or negotiates, with the SC-UE 420, the addition of UE 114 to the BUDC group (or secondary cell) of the SC-UE. The base station 120 can select UE 114 for addition to the BUDC group and request that the SC-UE accept the addition of the UE 114 to the BUDC group. At 560, the base station 120 configures the UE 114 for the BUDC group 410 and adds the UE 114 to the BUDC group for dual connectivity. The base station 120 can send a layer-2 or layer-3 message to the UE 114 to configure the UE 114 and/or direct the UE to join the BUDC group.

At 565, the SC-UE 420 and the UE 114 communicate with one another to establish connectivity for exchanging control-plane information or user-plane data through the secondary cell of the SC-UE 420. As one example, and similar to the communications exchanged at 535, the UE 114 requests addition to the group and the SC-UE 420 acknowledges a successful addition, which then enables the SC-UE 420 and the UE 114 to exchange control plane and data-plane communications.

At 570 the SC-UE 420 broadcasts data to the member UEs 110 of the BUDC group, which in this example include the UE 112, UE 113, and UE 114. The broadcast data may include aggregate data received from multiple UEs of the BUDC group, such as aggregate sensor information.

At 575, the SC-UE 420 and the UE 112 of the BUDC group exchange unicast data. The unicast data may include data packets relayed or routed by the SC-UE from other UEs of the BUDC group. In some cases, the unicast data includes aggregate data collected from multiple other UEs of the BUDC group. At 580, the SC-UE 420 and the UE 113 of the BUDC group exchange unicast data. Similarly, the unicast data may include data packets relayed or routed by the SC-UE from other UEs of the BUDC group.

At 585, the base station 120 and the UE 113 of the BUDC group exchange control-plane information or data through the primary cell of the base station 120. As noted, the base station 120 provides control-plane signaling and user-plane data for UEs of the BUDC group as the primary cell. At 590, the SC-UE 420 and the UE 114 of the BUDC group exchange unicast data. At 595, the base station 120 and the UE 114 of the BUDC group exchange control-plane information or data through the primary cell of the base station 120. It will be appreciated that 570, 575, 580, 585, 590 and 595 are examples of operations that may occur once a BUDC group has been formed. Any of operations 570, 575, 580, 585, 590 and 595 may be performed independently of the other operations, or any two or more of those operations can be performed in any order.

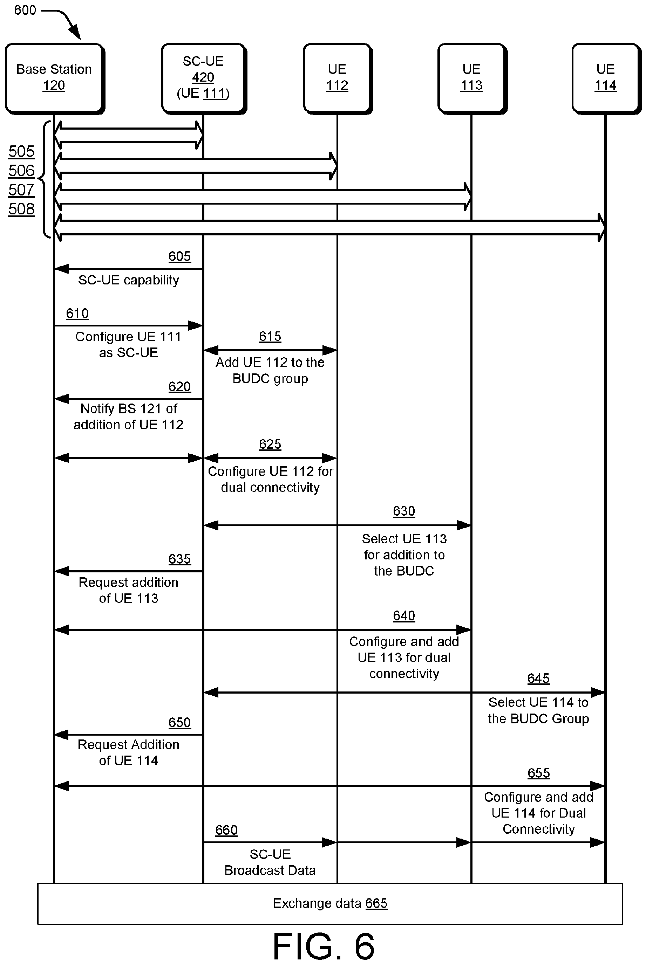

FIG. 6 illustrates an example of transactions at 600 between a secondary cell-user equipment and other user equipment to form a base station-user equipment dual connectivity group in accordance with aspects of secondary cell-user equipment handovers. The base station 120 and the UEs 111 through 114 may be implemented similar to the entities described with reference to FIGs. 1-4. Generally, the transactions of FIG. 6 are described in the context of the environment of FIG. 4 in which a base station 120 and SC-UE 420 provide dual connectivity through a primary cell and secondary cell, respectively.

With reference to FIG. 5A, at 505, the UE 111 operates with single connectivity to the base station 120. Similarly, at 506, the UE 112 operates with single connectivity to the base station 120, at 507, the UE 113, operates with single connectivity to the base station 120, and at 508, the UE 114 operates with single connectivity to the base station 120.

At 605, the UE 111 provides an indication to the base station 120 of capabilities to act or assume the role of SC-UE for a BUDC group 410. This indication may include indicating that the UE 111 includes a secondary cell manager 220 for enabling SC-UE capabilities or providing the secondary cell for the BUDC group.

At 610, the base station 120 configures the UE 111 as the SC-UE 420 for the BUDC group 410. The base station 120 may grant resources of an air interface to the SC-UE 420 for the BUDC group or an encryption key for use in securing secondary cell communications among the UEs of the BUDC group.

At 615, the SC-UE 420 adds the UE 112 to the BUDC group. The SC-UE 420 may coordinate the addition of the UE 112 through a local wireless network connection, such as a Bluetooth^{™} or WLAN connection. For example, the SC-UE may provide to the UE 112, through the local wireless network connection, an identifier associated with the BUDC group or the encryption key for the secondary cell. At 620, the SC-UE 420 notifies the base station 120 that the UE 112 was added to the BUDC group. At 625, the base station 120 then configures the UE 112 for dual connectivity in the BUDC group. Accordingly, the SC-UE 420 can communicate with the UE 112, and the base station 120 can communicate with the UE 112. For example, the base station 120 directs the UE 112 to communicate the SC-UE 420 as a secondary cell. The SC-UE 420 and the UE 112 then perform a series of handshakes, requests, confirmations, and so forth to establish connectivity with one another. For example, the UE 112 initiates communications with the SC-UE 420 using information received from the base station 120. This can include, at times, the UE 112 and/or the SC-UE 420 reporting a successful connection to the base station 120. In some aspects, the base station 120 sends a layer-3 message to the UE 112 to configure the UE 112 for operation in the BUDC group.

At 630, the SC-UE 420 selects the UE 113 for addition to the BUDC group 410. The SC-UE can select the UE 113 for addition to the BUDC group based on a use profile of the UE 113, an application of the UE 113 (*e.g.*, application layer communication with other UEs), a location of the UE 113, a proximity of the UE 113 with the SC-UE, or a mobility state of the UE 113. At 635, the SC-UE 420 requests (or suggests), to the base station 120, the addition of the UE 113 to the BUDC group. At 640, the base station 120 configures the UE 113 for the BUDC group 410 and adds the UE 113 to the BUDC group for dual connectivity. The base station 120 can send a layer-3 message to the UE 113 to configure the UE 113 and direct the UE 113 to join the BUDC group.

At 645, the SC-UE 420 selects the UE 114 for addition to the BUDC group 410. The SC-UE can select the UE 114 for addition to the BUDC group based on any suitable criteria, such as a location of the UE 114, a proximity of the UE 114 with the SC-UE, or a mobility state of the UE 114. At 650, the SC-UE 420 requests, to the base station 120, the addition of the UE 114 to the BUDC group. At 655, the base station 120 then configures the UE 114 for the BUDC group 410 and adds the UE 114 to the BUDC group for dual connectivity. In some cases, the base station 120 sends a layer-3 message to the UE 114 to configure the UE 114 and direct the UE to join the BUDC group.

At 660, the SC-UE 420 broadcasts data to the member UEs 110 of the BUDC group, which in this example include the UE 112, UE 113, and UE 114. The broadcast data may include aggregate data received from multiple UEs of the BUDC group, such as aggregate sensor information that is useful to one or more of the UEs in the BUDC group.

At 665, the UEs 112, 113, and/or 113 exchange data with either, or both of, 1) the primary cell provided by the base station 120 and 2) the secondary cell provided by the SC-UE 420. As one example, the UE 112 exchanges data using the secondary cell, the UE 113 exchanges data using both the primary cell and the secondary cell, and the UE 114 exchanges data using the primary cell. The exchange of data at 665 may include performing operations analogous to any or all of operations 575, 580, 585, 590 and 595, as described above in connection with FIG. 5B.

### Secondary Cell-User Equipment Handovers

As further described, a base station provides configuration information to selected UEs in order to establish a BUDC group. In some implementations, the base station manages membership of the BUDC group by adding or removing UEs from the BUDC group. As an example, the base station receives characteristics (*e.g*., any one or more of: location, power information, signal-to-interference-plus-noise ratio (SINR) information, channel quality indicator (CQI) information, channel state information (CSI), Doppler feedback, frequency bands, BLock Error Rate (BLER), Quality of Service (QoS), Hybrid Automatic Repeat reQuest (HARQ) information (*e.g*., first transmission error rate, second transmission error rate, maximum retransmissions), latency, Radio Link Control (RLC), Automatic Repeat reQuest (ARQ) metrics, received signal strength indicator (RSSI), uplink SINR, timing measurements, error metrics, power mode, Internet Protocol (IP) layer throughput) about the UE(s) included in a BUDC group, and determines to move a UE from a first (source) BUDC group to a second (target) BUDC group. At times, moving the UE between BUDC groups includes performing a secondary cell-user equipment handover (SC-UE handover) from a source SC-UE to a target SC-UE.

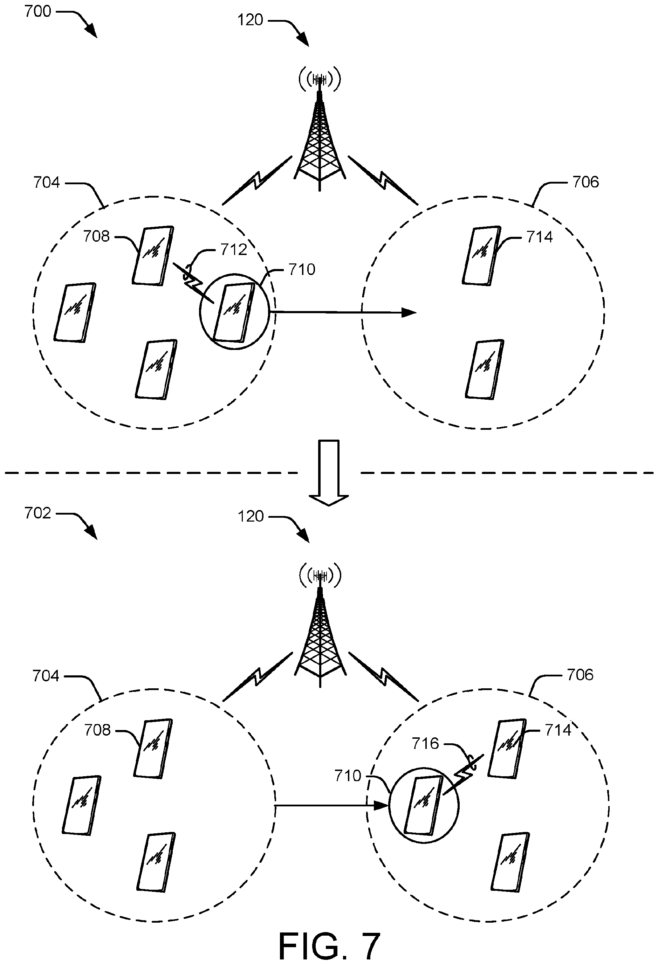

FIG. 7 illustrates an example environment in which aspects of SC-UE handovers can be implemented. Environment 700 corresponds to the example environment at a first point in time and environment 702 corresponds to the example environment at a second, arbitrary later point in time. Thus, the environment 700 and the environment 702, collectively, illustrate aspects of SC-UE handovers in the example environment. The environments 700 and 702 include the base station 120 of FIG. 1, where the reference to base station 120 signifies any one of the base station 121, the base station 122, the base station 123, or the base station 124.

As further described, the base station 120 establishes a first BUDC group 704 and a second BUDC group 706. The base station 120 serves as a primary and/or master cell to the UEs in each BUDC group. In other words, the base station 120 serves as a primary cell for a first group of UEs included in the BUDC group 704 and a second group of UEs included in the BUDC group 706. At times, the base station 120 uses different frequencies and/or time slots. For instance, the base station 120 communicates with the first BUDC group 704 (*e.g*., through a respective SC-UE) using a first carrier frequency and/or a first time slot scheme of a wireless network, and communicates with the second BUDC group 706 (*e.g*., through a respective SC-UE) using a different second carrier frequency and/or a different second time slot scheme of the wireless network, thus enabling a simultaneous connection to the different groups by using the different schemes. Thus, the base station 120 communicates with the different BUDC groups using the same wireless network.

The BUDC group 704 includes an SC-UE 708 that performs as a secondary cell to the UEs included in the BUDC group. To illustrate, the SC-UE 708 provides secondary cell services to UE 710 by way of wireless link 712, where the BUDC group 704 includes the UE 710. Similarly, the BUDC group 706 includes an SC-UE 714 that performs as a secondary cell to the UEs included in the BUDC group 706. In implementations, the base station 120 selects and configures each of the SC-UE 708 and SC-UE 714 to provide the secondary cell to each respective BUDC group. Alternatively or additionally, as further described, the base station 120 grants or assigns air interface resources to each SC-UE for use within the secondary cell(s). The SC-UEs then schedule, from the assigned air interface resources, uplink or downlink resources for the UEs of the respective BUDC groups for communications within the secondary cell. For example, the wireless link 712 generally corresponds to communications sent using the uplink and/or downlink resources of the secondary cell that are assigned to the UE 710 by the SC-UE 708. In implementations, the SC-UE 708, the UE 710, and/or the SC-UE 714 can be respective instances of the UE 110 of FIG. 1.

In implementations, the base station 120 determines to move a UE from one BUDC group to another BUDC group. The base station 120, as one example, receives one or more metrics and/or characteristics from the UE 710, such as a current UE location or a signal strength, and determines to move the UE 710 from the BUDC group 704 to the BUDC group 706. For instance, the base station 120 determines, based on the current UE location, that the UE 710 has moved to a location further than a (first) predefined distance to the SC-UE 708. Alternatively or additionally, the base station 120 determines the UE 710 has moved to a location that is relatively closer to the SC-UE 714 that the SC-UE 708 and/or that the UE 710 has moved within a (second) predefined distance to the SC-UE 714.

While described as a base station determining to move a UE from one BUDC group to another BUDC group, in alternative or additional implementations, a SC-UE (*e.g.,* the SC-UE 708) determines to move a UE (*e.g.*, the UE 710) to a different BUDC group, such as based on the metrics and/or characteristics as described above. For instance, an SC-UE receives one or more metrics and/or characteristics from a UE based on communications performed in the secondary cell, and determines to move the UE (*e.g.*, perform a handover of the UE to another SC-UE) after analyzing the metrics. For example, the analysis can indicate the UE has moved closer to a second SC-UE in a second BUDC, and that the UE would experience lower communication latencies in the second BUDC. In alternative or additional implementations, the SC-UE generates metrics and/or characteristics from (secondary cell) communications with the UE, and analyzes the (SC-UE generated) metrics to determine whether perform an SC-UE handover of the UE to improve operating performances.

To move a UE from a first BUDC group to a second BUDC group, various implementations perform an SC-UE handover. Accordingly, at times, the term "SC-UE handover" denotes moving a UE from a first BUDC group to a second BUDC group. Generally, an SC-UE handover disconnects a UE from a first (source) SC-UE that provides a first secondary cell to a first (source) BUDC group, and connects the UE to a second (target) SC-UE that provides a second secondary cell to a second (target) BUDC group. In other words, an SC-UE handover performs a handover from a first (source) secondary cell provided by a first SC-UE to a second (target) secondary cell provided by a second SC-UE. With reference to the environment 702, the base station 120 performs an SC-UE handover that disconnects the UE 710 from the (source) SC-UE 708 of the BUDC group 704 and connects the UE 710 to the (target) SC-UE 714 of the BUDC group 706. In the environment 702, the UE 710 communicates in the (target) secondary cell using uplink and/or downlink resources assigned by the SC-UE 714. In performing the SC-UE handover, the (source) SC-UE 708 releases the UE 710 from the BUDC group 704 and no longer assigns uplink and/or downlink resources of the (source) secondary cell to the UE 710.

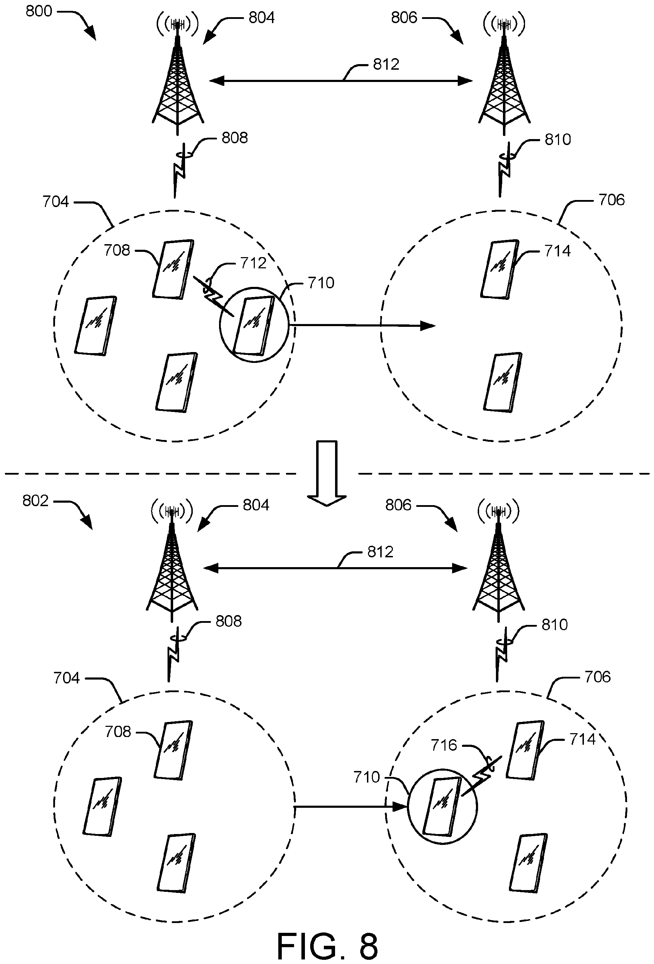

In some implementations, a SC-UE handover corresponds to a dual BUDC-handover that not only performs an handover between a source SC-UE to a target SC-UE, but also includes disconnecting a UE from a first (source) base station that provides a first (source) primary cell to a first (source) BUDC group, and connecting the UE to second (target) base station that provides a second (target) primary cell to a second (target) BUDC group. FIG. 8 illustrates an example environment in which aspects of SC-UE handovers can be implemented, such as a dual BUDC-handover. Environment 800 corresponds to the example environment at a first point in time and environment 802 corresponds to the example environment at a second, arbitrary point later in time. Thus, the environment 800 and the environment 802, collectively, illustrate aspects of SC-UE handovers and/or dual BUDC-handovers in the example environment.

The environments 800 and 802 include a first base station 804 and a second base station 806, where each base station represents an instance of the base station 120 of FIG. 1 (*e.g*., any one of the base station 121, the base station 122, the base station 123, or the base station 124). The first base station 804 serves as a primary and/or master cell to the UEs in the first BUDC group 704 of FIG. 7. The first base station 804 also selects and configures the SC-UE 708 to act as a secondary cell to the BUDC group 706, and grants/assigns air interface resources for the SC-UE 708 to use in the secondary cell. Wireless link 808 generally corresponds to communications exchanged with UEs of the BUDC group 704.

Similarly, the second base station 806 serves as a primary and/or master cell to the UEs in the second BUDC group 706 of FIG. 7. The second base station 806 selects and configures the SC-UE 714 to act as a secondary cell to the BUDC group 706, and grants/assigns air interface resources for the SC-UE 714 to use in the secondary cell. Wireless link 810 generally corresponds to communications exchanged with UEs of the BUDC group 706.

In the environment 800, the base station 804 (and/or the SC-UE 708) determines to move the UE 710 from the BUDC group 704 to the BUDC group 706, such as based on metrics and/or characteristics as further described. In determining to move the UE 710, the base station 804 (and/or the SC-UE 708) determines to perform an SC-UE handover. Similar to that described with reference to FIG. 7, the source SC-UE and source BUDC group of the handover correspond to the SC-UE 708 and BUDC group 704, while the target SC-UE and target BUDC group of the handover correspond to the SC-UE 714 and BUDC group 706. However, in the environment 800, the base station 806 acts as the primary cell to the (target) SC-UE 714 and/or BUDC group 706. Accordingly, in performing the SC-UE handover (*e.g*., moving the UE from a source BUDC to a target BUDC), the base station 804 performs a handover of the UE to the base station 806.

In aspects of dual BUDC-handovers, base stations negotiate a handover with one another. For instance, the base station 804 negotiates a handover of the UE 710 with the base station 806 using communication link 812. Generally, the communication link 812 represents any suitable communication medium and/or protocol that can be used to exchange information, such as the Xn interface described at 105 and at 107 of FIG. 1 or the X2 interface described at 106 of FIG. 1. In some implementations, the communication link 812 includes communication links that are routed through core network(s) (*e.g*., through an NG2 or NG3 interface, through an S1 interface). Negotiating the handover can include the source base station (*e.g*., base station 804) requesting a handover from the target base station (*e.g.*, base station 806), receiving handover request acknowledgements, querying or receiving resource allocations assignments from the target base station, exchanging UE identification information, setting timers, and so forth.

In the environment 802 the UE 710 has successfully performed a handover from the BUDC group 704 to the BUDC group 706, where the handover includes the UE disconnecting from the SC-UE 708, disconnecting from the base station 804, connecting to the base station 806, and connecting to the SC-UE 714 as further described. The wireless link 716, for instance, generally corresponds to air interface resources assigned to the UE 710 by the SC-UE 714, where the base station 806 assigns the air interface resources to the secondary cell provided by the SC-UE 714.

As further described, a base station or SC-UE can determine to perform a handover that moves a UE from a first BUDC to a second BUDC based on characteristics and/or metrics. This allows the base station (or SC-UE) to identify when operating performances degrade and move the UE to improve the operating performances. For example, the base station can identify when a UE moves away from a first SC-UE in a first BUDC and closer to a second SC-UE in a second BUDC, and perform a handover that moves the UE to the second BUDC to improve an operating performance (*e.g*., bit error rates, signal quality and/or latency).

### Signaling and Control Transactions for Secondary Cell-User Equipment Handovers

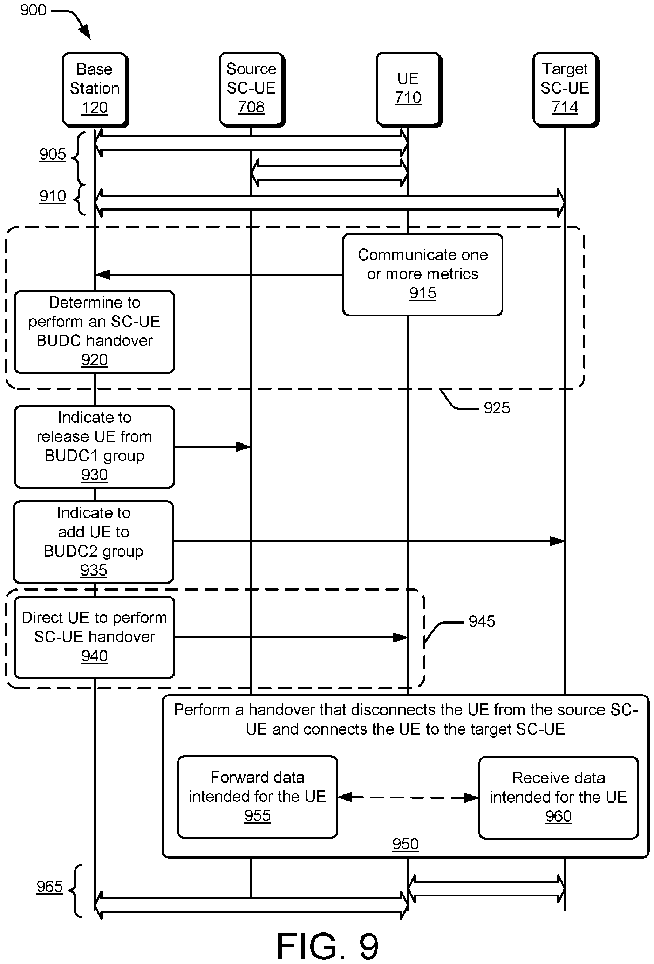

FIGs. 9, 10, 11A, and 11B illustrate example signaling and control transaction diagrams between various network entities, such as a source base station, a source SC-UE, a user equipment, a target SC-UE, and/or a target base station in accordance with one or more aspects of SC-UE handovers. The signaling and control transactions may be performed by instance(s) of the base station 120 and the UE 110 of FIG. 1, such as those described with reference to FIG. 7 and FIG. 8.

A first example of signaling and control transactions for SC-UE handovers is illustrated by the signaling and control transaction diagram 900 of FIG. 9. At 905, the UE 710 maintains a dual connection with the source SC-UE 708 and the base station 120. For example, with reference to FIGs. 5A and 5B, the base station 120 configures a BUDC group that includes the UE 710 and the source SC-UE 708. In implementations, the base station 120 provides primary cell services to the BUDC group, and the source SC-UE 708 provides secondary cell services to the BUDC group. Similarly, at 910, the target SC-UE 714 maintains a connection to the base station 120.

At 915, the UE 710 communicates one or more metrics and/or characteristics (*e.g.*, any one of more of: first transmission error rate, second transmission error rate, maximum retransmissions, latency, ARQ metrics, RSSI, uplink SINR, timing measurements, error metrics, power mode, IP layer throughput, UE location, signal strength, a use profile) to the base station 120, where the UE 710 operates as part of a first BUDC. In some implementations, the UE 710 communicates the metrics and/or characteristics in response to receiving measurement request(s) and/or capability request(s) from the base station 120. Alternatively or additionally, the UE communicates the metrics and/or characteristics to the base station 120 that are based on communications exchanged between the UE 710 and the base station 120, or communications exchanged between the UE 710 and the SC-UE 708.

At 920, and in response to receiving the one or more metrics and/or characteristics, the base station 120 determines to perform an SC-UE handover of the UE 710 from the first BUDC to a second BUDC. For example, the base station 120 analyzes the metrics and determines that one or metrics indicate that operating performance(s) of the UE (*e.g.,* a latency metric, and/or a signal strength metric) have degraded below a threshold value. As another example, the metrics indicate the UE has moved to a location that is outside a predetermined distance from an SC-UE (*e.g*., source SC-UE 708) that provides a secondary cell to the first BUDC.

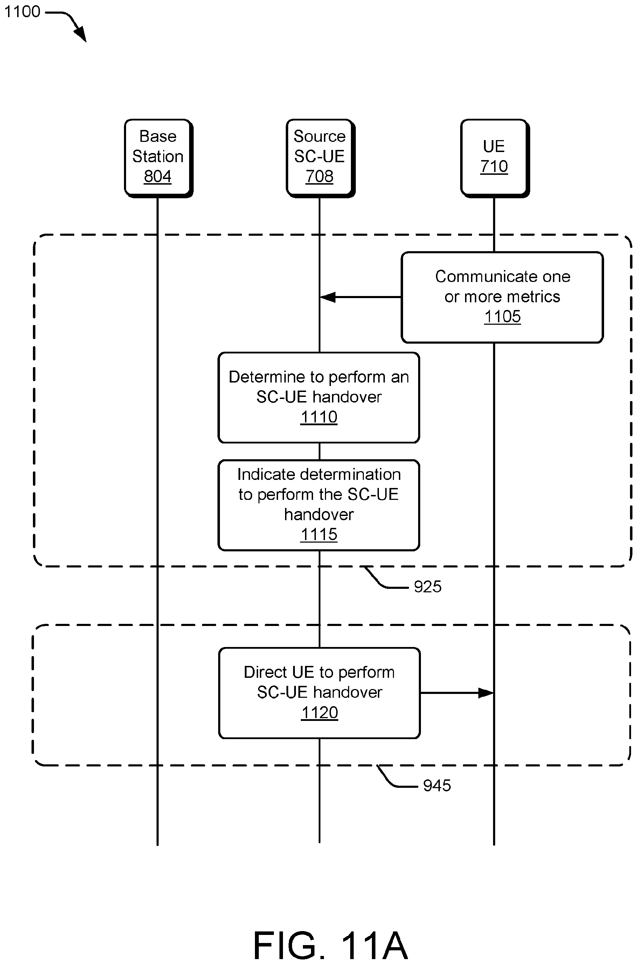

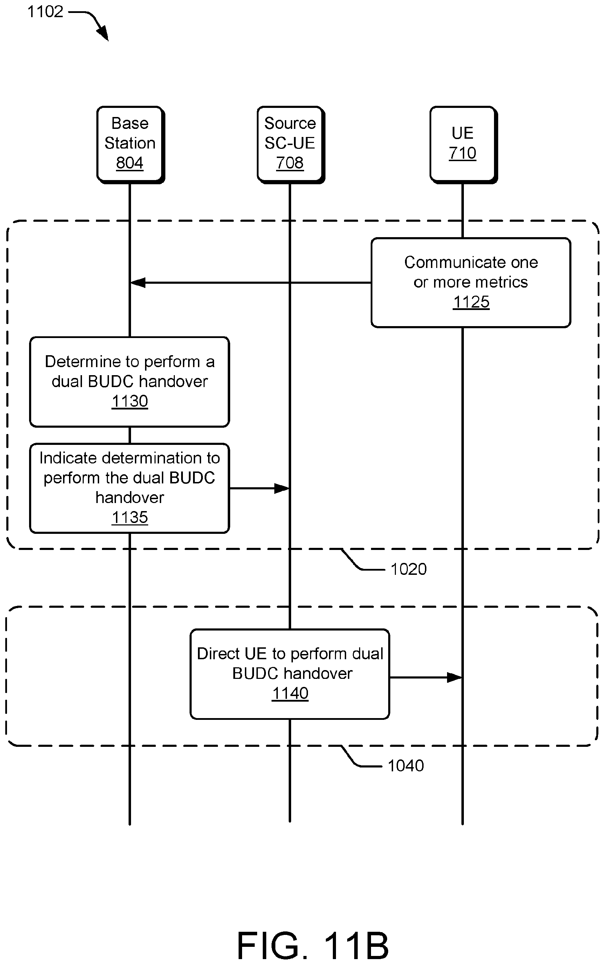

Collectively, at 925, the base station 120 receives one or more metrics from the UE 710 (*e.g.,* at 915), and determines to perform an SC-UE handover (*e.g.,* at 920). Alternatively or additionally, the SC-UE 708 determines to perform the SC-UE handover and informs the base station, such as that described with reference to FIG. 11.

At 930, the base station 120 indicates, to the source SC-UE 708 that provides a secondary cell to the UE 710 within the first BUDC (BUDC1) group, to release the UE from the BUDC1 group. For example, the BUDC group coordinator 268 of the base station 120 sends layer-3 messages to the source SC-UE 708 to remove the UE 710 from the secondary cell of the (source) BUDC1 group. In response to receiving (or sending) the indication to release the UE, the source SC-UE 708 (or the base station 120) begins to buffer data intended for the UE 710 to forward to the target SC-UE at a later point in time. This allows the network to provide data to the UE in an uninterrupted manner (*e.g*., preventing a loss of data due to the handover).

At 935, the base station 120 indicates, to a target SC-UE 714 that provides a secondary cell to UEs within a second BUDC (BUDC2) group, to add the UE 710 to the BUDC2 group. For example, the BUDC group coordinator 268 of the base station 120 sends layer-3 messages to the target SC-UE 714 to add the UE 710 to the secondary cell of the (target) BUDC2 group.

At 940, the base station 120 directs the UE 710 to perform an SC-UE handover from the source SC-UE 708 to the target SC-UE 714. Alternatively or additionally, the base station communicates handover information to the UE, such as an identifier of the target SC-UE 714, new radio resources, security information, and so forth.

Generally, at 945, the UE receives a command to perform an SC-UE handover. With reference to FIG. 9, the base station directs the UE to perform the SC-UE handover as described at 940. However, in other implementations, the UE receives the command from the SC-UE as described with reference to FIG. 11A.

At 950, the UE 710 performs a handover that disconnects the UE from the source SC-UE 708 and connects the UE to the target SC-UE 714. In implementations, as part of performing the SC-UE handover, the source SC-UE 708 forwards data intended for the UE 710 to the target SC-UE 714 as illustrated at 955. Similarly, and as part of performing the SC-UE handover, at 960, the target SC-UE 714 receives the data intended for the UE 710. The forwarding and reception of data can include multiple messages, multiple handshakes, multiple acknowledgement, and so forth (not illustrated), between the source SC-UE and the target SC-UE.

In implementations, a first SC-UE of a first BUDC group communicates directly with a second SC-UE group of a second BUDC, such as communicating data intended for the UE that the first BUDC group (*e.g*., a first secondary cell) receives and/or retains while an SC-UE handoff is being performed. For example, with reference to FIG. 7, the base station 120 acts as a primary cell for the BUDC group 704 and the BUDC group 706. Accordingly, the base station 120 allocates air interface resources used by the first SC-UE and second SC-UE to perform inter-BUDC communications, such as time, frequency, and/or coding modulation schemes. The SC-UEs then perform inter-BUDC communications with one another using the time, frequency, and/or coding modulation schemes identified by the base station.

As another example, the source SC-UE 708 forwards the data indented for the UE 710 to the target SC-UE 714 by using an intermediary device. The source SC-UE 708, for instance, forwards the data to the base station 120 (not illustrated) and the base station 120 forwards the data to the target SC-UE 714 (not illustrated).

At 965, the UE 710 has a dual connection that includes a first connection with the base station 120 and a second connection with the target SC-UE 714. Thus, as part of performing the SC-UE handover, the UE moves from the first BUDC group to the second BUDC group.

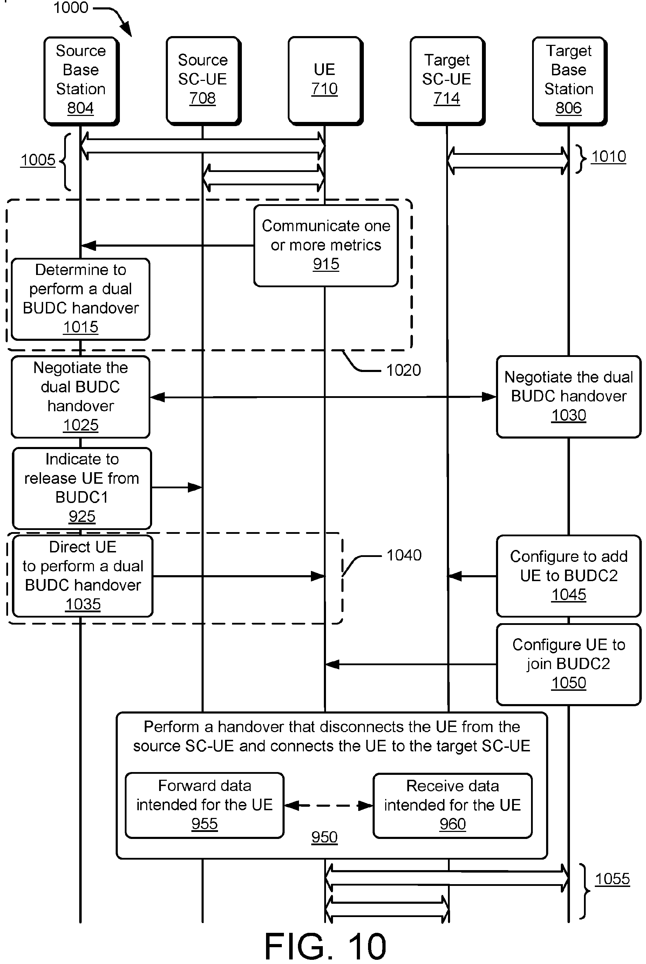

A second example of signaling and control transactions for SC-UE handovers is illustrated by the signaling and control transaction diagram 1000 of FIG. 10. In some aspects, the diagram 1000 illustrates aspects of an SC-UE handover that corresponds to a dual BUDC-handover.

At 1005, the UE 710 maintains a dual connection with the source SC-UE 708 and the source base station 804. For example, with reference to FIGs. 5A and 5B, the source base station 804 configures a BUDC group that includes the UE 710 and the source SC-UE 708. In implementations, the source base station 804 provides primary cell services to the BUDC group, and the source SC-UE 708 provides secondary cell services to the BUDC group. Similarly, at 1010, the target SC-UE 714 maintains a connection to the target base station 806, where the target SC-UE 714 and the target base station 806 participate in a second BUDC group that is different from the BUDC group associated with the source base station 804 and the source SC-UE 708. For instance, the target base station 806 provides primary cell services to the second BUDC group and the target SC-UE provides secondary cell services to the second BUDC group.

With reference to FIG. 9, at 915, the UE 710 communicates one or more metrics and/or characteristics to the source base station 804. At 1015, and in response to receiving the one or more metrics and/or characteristics, the source base station 804 determines to perform a dual-BUDC handover of the UE 710 from the first BUDC group to a second BUDC group. Collectively, at 1020, the base station 120 receives one or more metrics from the UE 710 (*e.g*., at 915), and determines to perform a dual BUDC handover (*e.g*., at 1015). Alternatively or additionally, the SC-UE 708 determines to perform the dual BUDC handover and informs the base station, such as that described with reference to FIG. 11.

Based on the determination at 1015, the source base station 804 and the target base station 806 negotiate the dual BUDC handover of the UE 710 at 1025 and 1030. For instance, the source base station 804 forwards UE capability information associated with the UE 710, UE measurement results, requested radio resources (*e.g*., air interface resources), and so forth. As another example, the target base station 806 allocates and/or reserves new radio resources, generates a handover request acknowledge message, and indicates the new radio resources to the source base station. Thus, the source base station 804 and the target base station 806 exchange inter-base station communications as part of performing a dual BUDC handover that moves a UE from a first BUDC group to a second BUDC group with a second primary cell supported by the second base station 806.

As described with reference to FIG. 9, at 925, the source base station 804 indicates, to the source SC-UE 708, to release the UE from the first (source) BUDC group. The source base station 804 also directs the UE to perform an SC-UE handover at 1035.

Generally, the UE receives a command to perform a dual BUDC handover at 1040. With reference to FIG. 10, the base station directs the UE to perform the SC-UE handover as described at 1035. However, in other implementations, the UE receives the command from the SC-UE as described with reference to FIG. 11B.

At 1045, the target base station 806 configures the target SC-UE 714 to add the UE 710 to the second (target) BUDC group. For instance, as further described, the BUDC group coordinator 268 of the target base station 806 sends layer-3 messages to the SC-UE 714 that direct the SC-UE 714 to add the UE 710 to the target BUDC group.

At 1050, the target base station 806 configures the UE to join the second (target) BUDC group. To illustrate, and with reference to FIGs. 5A and 5B, the target base station 806 configures UE 710 for the second BUDC group, such as by configuring the UE 710 for dual connectivity associated with frequency and/or time schemes associated with the second (target) BUDC group. Alternatively or additionally, the base station 806 sends a layer-3 message to the UE 710 that directs or requests the UE 710 to join the second (target) BUDC group.

As described with reference to FIG. 9, at 950, the UE 710 performs a handover that disconnects the UE from the source SC-UE 708 and connects the UE to the target SC-UE 714. In FIG. 10, the handover corresponds to a dual BUDC handover. In implementations, as part of performing the handover, the source SC-UE 708 forwards data intended for the UE 710 to the target SC-UE 714 as illustrated at 955. Similarly, and as part of performing the SC-UE handover, at 960, the target SC-UE 714 receives the data intended for the UE 710. The forwarding and reception of data can include multiple messages, multiple handshakes, multiple acknowledgements, and so forth (not illustrated), between the source SC-UE and the target SC-UE. Accordingly, as part of performing the SC-UE handover, the UE moves from the first BUDC group to the second BUDC group.

At 1155, the UE 710 maintains a dual connection to the target SC-UE 714 and the target base station 806. In other words, the target base station 806 provides primary cell services to the UE 710, and the target SC-UE 714 provides secondary cell services to the UE 710.

A third example and a fourth example of signaling and control transactions for SC-UE and/or dual BUDC handovers are illustrated by the signaling and control transaction diagram 1100 and 1102 of FIGs. 11A and 11B, respectively. In implementations, the diagram 1100 of FIG. 11A illustrates an alternative implementation for determining to perform an SC-UE handover as described at 925 and/or directing a UE to perform the handover at 945 of FIG. 9, where the SC-UE determines to perform the SC-UE handover. Similarly, the diagram 1102 of FIG. 11B illustrates an alternative implementation for determining to perform a dual BUDC handover as described at 1020 and/or directing a UE to perform the handover at 1040 of FIG. 10.

With reference to the transaction diagram 1100, at 1105, the UE 710 communicates one or more metrics to the source SC-UE 708, such as those communicated to the base station 120 at 915 of FIG. 9. Alternatively or additionally, the SC-UE 708 generates the one or more measurements from communications exchanged with the UE 710.

At 1110, the SC-UE 708 determines to perform an SC-UE handover. For example, such as that described at 920 of FIG. 9, the SC-UE 708 determines to perform the SC-UE handover based on analyzing the metrics and determining that one or metrics indicate that operating performance(s) of the UE (*e.g*., a latency metric, a signal strength metric) have degraded below a threshold value. As another example, the metrics indicate the UE has moved to a location that is outside a predetermined distance from an SC-UE (*e.g*., source SC-UE 708) that provides a secondary cell to the first BUDC. In response to making the determination at 1110, the SC-UE indicates, to the base station 120, to perform the SC-UE handover at 1115.

In some implementations, the SC-UE directs the UE to perform the SC-UE handover at 1120, such as by transmitting a command using air interface resources of the secondary cell. This process can be performed in conjunction with the process described at 925 (*e.g.,* at 1105, at 1110, and at 1115). However, the process described at 1120 can be optional, such that, in some scenarios, the base station directs the UE to perform the SC-UE handover as described at 940 and in response to receiving the indication sent at 1115. In other words, the SC-UE sometimes determines to perform the handover as described with reference to FIG. 11A, but the base station directs the UE 710 to perform the handover as described in FIG. 9.

In FIG. 11B, at 1125, the UE 710 communicates one or more metrics to the base station 804, such as those communicated to the base station 120 at 915 of FIG. 9. At 1130, the base station 120 determines to perform a dual BUDC handover. For example, similar to that described at 1015 of FIG. 10, the base station 804 determines to perform the dual BUDC handover based on analyzing the metrics and determining that one or metrics indicate that operating performance(s) of the UE (*e.g*., a latency metric, and/or a signal strength metric) have degraded below a threshold value. As another example, the metrics indicate the UE has moved to a location that is outside a predetermined distance from an SC-UE (*e.g*., source SC-UE 708) that provides a secondary cell to the first BUDC. In response to making the determination at 1130, the base station 804 indicates, to the SC-UE 708, to perform the dual BUDC handover at 1135.

In some implementations, the SC-UE directs the UE to perform the dual BUDC handover at 1140, such as by transmitting a command using air interface resources of the secondary cell. This process can be performed in conjunction with the process described at 1020 (*e.g*., at 1125, at 1130, and at 1135).

In various implementations, elements of FIG. 11A interact with elements of FIG. 11B. To illustrate, an SC-UE (*e.g*., SC-UE 708) can determine a single SC-UE handover, and inform the base station (*e.g*., base station 120, base station 804) of the single SC-UE handover, similar to that described at 1110 and at 1115. In responding to the notification of the single SC-UE handover, the base station may determine to perform a dual BUDC handover and inform the SC-UE, similar to that described at 1130 and at 1135.

### Example Methods

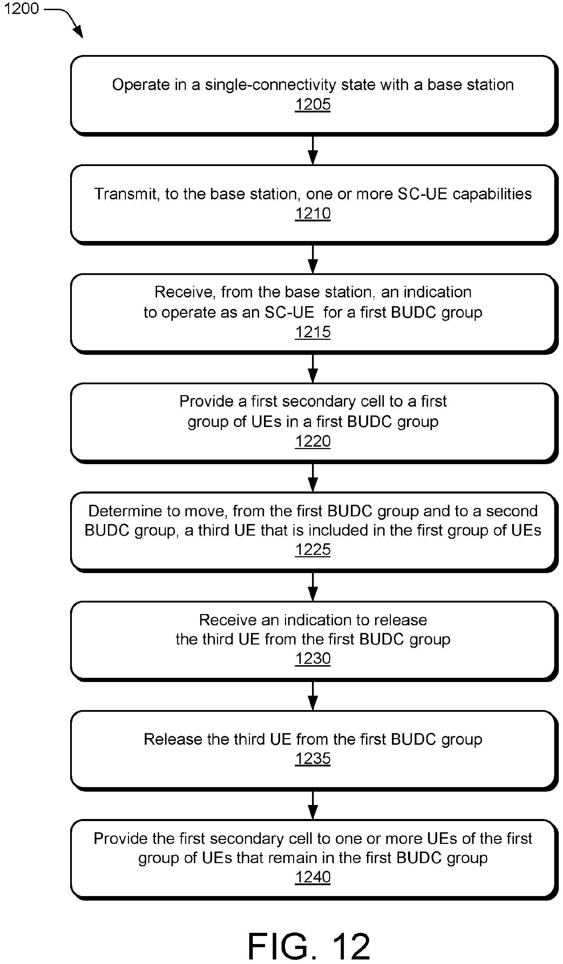

Example methods 1200, 1300, and 1400 are described with reference to FIGs. 12-14 in accordance with one or more aspects of SC-UE handovers. The order in which the method blocks are described are not intended to be construed as a limitation, and any number of the described method blocks can be skipped or combined in any order to implement a method or an alternative method. Generally, any of the components, modules, methods, and operations described herein can be implemented using software, firmware, hardware (*e.g*., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively, or additionally, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like.

FIG. 12 illustrates an example method 1200 for SC-UE handovers and/or dual BUDC-handovers. In some implementations, operations of method 1200 are performed by a UE configured as a source SC-UE provides a secondary cell in a BUDC group, such as SC-UE 708 of FIG. 7.

At 1205, the UE operates in a single-connectivity state with a base station. For example, the UE (*e.g*., UE 111) operates in a single connectivity state with the base station (*e.g*., base station 121) as described at 505, at 506, at 507, and at 508 of FIG. 5A and FIG. 6.

At 1210, the UE transmits, to the base station, one or more SC-UE capabilities. For example, the UE (*e.g.,* UE 111) transmits SC-UE capabilities to the base station (*e.g.,* base station 121) as described at 505 of FIG. 5A or 605 of FIG. 6.

At 1215, the UE receives, from the base station, an indication to operate as an SC-UE for a first BUDC group. As one example, the UE (*e.g.,* UE 111, SC-UE 420, SC-UE 708) receives a message from the base station (*e.g.,* base station 121) that directs the UE to configure as an SC-UE to provide a secondary cell to the first BUDC group as described at 510 of FIG. 5A or 610 of FIG. 6.

At 1220, a source SC-UE provides a first secondary cell to a first group of UEs in a first BUDC group. For example, with reference to FIGs. 5, 6, and 9, the SC-UE (*e.g.,* UE 111, SC-UE 420, SC-UE 708) schedules air interface resources for communications (*e.g.,* wireless link 712) in the first BUDC group (*e.g.,* BUDC group 704) that use the first secondary cell.

At 1225, the source SC-UE determines to move, from the first BUDC group and to a second BUDC group, a third UE that is included in the first group of user equipments (UEs). For example, the source SC-UE (*e.g.,* SC-UE 708) determines to move the third UE (*e.g.,* UE 710) from the first BUDC group (*e.g.,* BUDC group 704) to the second BUDC group (*e.g*., BUDC group 706), where the second BUDC group includes a second UE configured as a target SC-UE (*e.g*., SC-UE 714) that provides a second secondary cell to a second group of UEs. This can include the SC-UE determining to perform an SC-UE handover as described with reference to transaction diagram 1100, or the SC-UE determining to perform a dual BUDC handover as described with reference to transaction diagram 1102. In implementations, the source SC-UE determines to move the third UE based on at least one of: a location of the third UE, or a signal strength associated with the third UE. Alternatively or additionally, the source SC-UE receives an indication from a base station associated with the first BUDC group (*e.g*., base station 120) that directs the source SC-UE to perform an SC-UE handover that moves the third UE from the first BUDC to the second BUDC, such as that described at 925 of FIG. 9 and FIG. 10. At times, the source SC-UE sends a handover command to the third UE that directs the third UE to handover to the target SC-UE, such as that described with reference to FIG. 11A and 11B.

At 1230, the source SC-UE receives, from a base station associated with the first BUDC group, an indication to release the third UE from the first BUDC group. For example, the source SC-UE (*e.g*., SC-UE 708) receives an indication from a base station acting as a primary cell (*e.g.*, base station 120) of the first BUDC (*e.g.*, BUDC group 704). In some implementations, the source SC-UE begins to buffer data intended for the third UE in response to receiving the indication in order to provide uninterrupted communication data to the third UE during the SC-UE handover.

At 1235, the source SC-UE releases the third UE from the first BUDC group. For example, the source SC-UE (*e.g.*, SC-UE 708) releases the third UE (*e.g.*, UE 710) from the first BUDC group (*e.g.*, BUDC group 704) as described at 940 of FIG. 9 and 10. In releasing the third UE from the first BUDC group, the source SC-UE ceases to allocate air interface resources of the first secondary cell to the third UE. In some implementations, the source SC-UE forwards data intended for the third UE to the target SC-UE. For example, in implementations, the base station acts as a primary and/or master cell to the source SC-UE (*e.g*., SC-UE 708) and the target SC-UE (*e.g*., SC-UE 714), and the source SC-UE forwards the data to the target SC-UE using air interface resources allocated by the base station. Alternatively or additionally, the source SC-UE forwards the data to the target SC-UE through one or more intermediaries, such as the base station 804 and/or the base station 806.

At 1240, the source SC-UE provides the first secondary cell to one or more UEs of the first group of UEs that remain in the first BUDC group. The source SC-UE (*e.g.*, SC-UE 708), for example, schedules and/or allocates air interface resources to the UEs that remain in the first BUDC group (*e.g.*, BUDC group 704) as illustrated in the environment 702 of FIG. 7.

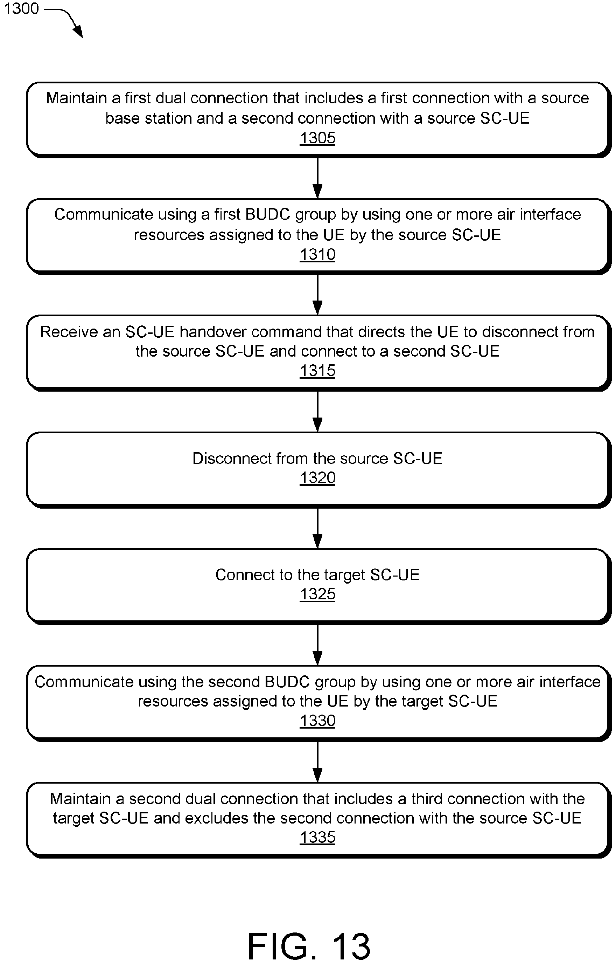

FIG. 13 illustrates an example method 1300 for SC-UE handovers. In some implementations, operations of method 1300 are performed by a UE included in a BUDC group, such as UE 710 of FIG. 7.

At 1305, the UE maintains a first dual connection that includes a first connection with a source base station, and a second connection with a source secondary cell-user equipment (SC-UE). As one example, with reference to FIG. 9 and FIG. 10, the UE (*e.g*., UE 710) simultaneously maintains a dual connection with a source base station (*e.g*., source base station 120) and a source SC-UE (*e.g*., SC-UE 708), where the source base station and the source SC-UE provide primary and secondary cell services for a first BUDC group.

At 1310, a UE communicates using a first BUDC group by using one or more air interface resources assigned to the UE by the source SC-UE. In implementations, the UE (*e.g.*, UE 710) communicates using the first BUDC group (*e.g.*, BUDC group 704) by using air interface resources assigned to the UE by the source SC-UE (*e.g*., SC-UE 708), where the source SC-UE provides a first secondary cell to the first BUDC group. For instance, the UE exchanges communications using the first BUDC group by using a first carrier frequency and/or a first timeslot of a wireless network assigned to the first BUDC group by a base station (*e.g*., base station 120).

At 1315, the UE receives an SC-UE handover command that directs the first UE to disconnect from the source SC-UE and connect to a target SC-UE that provides a second secondary cell to a second BUDC group. The UE (*e.g*., UE 710), as one example, receives the SC-UE handover command from the source SC-UE (*e.g*., SC-UE 708) as described with reference to FIGs. 11A and 11B. As another example, the UE (*e.g*., UE 710) receives the SC-UE handover command from a base station that acts as a primary cell to the first BUDC group. In some implementations, the SC-UE handover command Alternatively or additionally directs the UE to disconnect from a first base station and connect to a second base station.

At 1320, the UE disconnects from the source SC-UE. For instance, the UE (*e.g.*, UE 710) disconnects from the first SC-UE (*e.g*., SC-UE 708). In disconnecting from the source SC-UE, the UE sometimes leaves and/or exits the first BUDC group (*e.g*., BUDC group 704). In other words, the source SC-UE no longer acts as a secondary cell to the UE and no longer assigns air interface resources (of the first secondary cell) to the UE. Alternatively or additionally, the UE disconnects from a first base station that acts as a primary cell to the first BUDC group.

At 1325, the UE connects to the target SC-UE. For instance, the UE (*e.g*., UE 710) connects to the target SC-UE (*e.g*., SC-UE 714). In connecting to the target SC-UE, the UE joins the second BUDC group. In other words, the target SC-UE acts as a secondary cell to the first UE and assigns air interface resources (of the second secondary cell) to the UE. Alternatively or additionally, the UE connects to a second base station that acts as a primary cell to the UE and second BUDC group.

At 1330, the UE communicates using the second BUDC group by using one or more air interface resources assigned to the UE by the target SC-UE. The UE (*e.g*., UE 710), as one example, communicates using the second BUDC group (*e.g*., BUDC group 706) by using one or more air interface resources (*e.g*., wireless link 716) assigned to the UE by the target SC-UE (*e.g*., SC-UE 714). In implementations, the UE communicates using the second BUDC group by using a second carrier frequency and/or second timeslot of the wireless network that are assigned to the second BUDC group by a base station (*e.g*., base station 120), where the second carrier frequency and/or second timeslot are different from the first carrier frequency and/or first timeslot used to communicate in the first BUDC group.

At 1335, the UE maintains a second dual connection that includes a third connection with the target SC-UE and excludes the second connection with the source SC-UE. For example, with reference to FIG. 9 and described at 950, the UE (*e.g*., UE 710) maintains the first connection to the source base station (*e.g*., base station 120), disconnects the second connection to the source SC-UE (*e.g*., SC-UE 708), and maintains the third connection with the target SC-UE (*e.g*., SC-UE 714). As another example, with reference to FIG. 10 at 1035, the UE (*e.g*., UE 710) disconnects the first connection to the source base station (*e.g*., source base station 804), disconnects the second connection to the source SC-UE (*e.g*., SC-UE 708), maintains the third connection with the target SC-UE (*e.g.*, SC-UE 714), and maintains a fourth connection to a target base station (*e.g*., target base station 806). Thus, in performing the SC-UE handover, some aspects include the UE performing a dual BUDC-handover.

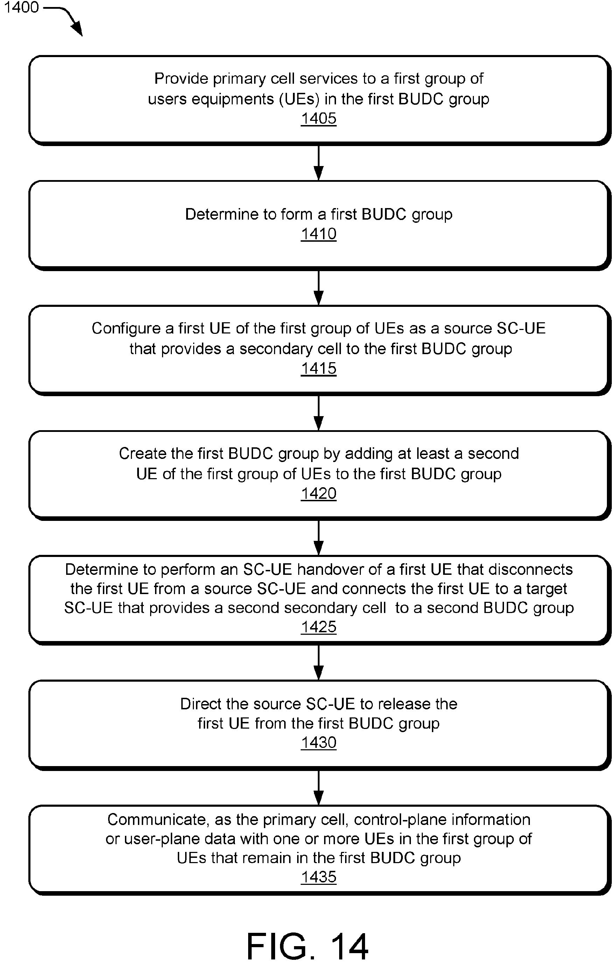

FIG. 14 illustrates an example method 1400 for SC-UE handovers, such as SC-UE handovers that pertain to handing over between source and target SC-UEs, and/or dual BUDC-handovers that include handing over between source and target base stations. In some implementations, operations of method 1400 are performed by a base station acting as a primary cell for a BUDC group, such as base station 120 of FIG. 1, base station 804 of FIG. 8, or base station 806 of FIG. 8.

At 1405, a base station provides primary cell services to a first group of UEs. For example, the base station (*e.g*., base station 120) provides primary cell services using a core network (*e.g*., core network 150).

At 1410, the base station determines to form a first BUDC group. For example, the base station (*e.g*., base station 121) determines to form the first BUDC group (*e.g*., BUDC group 704).

At 1415, the base station configures a first UE of the first group of UEs as a source SC-UE that provides a secondary cell to the first BUDC group. To illustrate, as described with reference to FIGS. 5A and 5B, the base station (*e.g*., base station 121) receives SC-UE capability information from a UE (*e.g*., UE 111) as described at 505, and communicates with the UE as described at 510 to configure the UE as an SC-UE (*e.g*., SC-UE 420, SC-UE 708).

At 1420, the base station creates the first BUDC group by adding at least a second UE of the first group of UEs to the first BUDC group. For example, the base station (*e.g*., base station 121) configures the SC-UE to add at least the second UE (*e.g*., UE 112, UE 708) as described at 515 of FIG. 5A, and configures at least the second UE (*e.g*., UE 112, UE 708) for dual connectivity as described at 520 of FIG. 5A. Thus, in creating the first BUDC group, the base station maintains a first connection to the SC-UE and a second connection to the second UE. In implementations, the base station (*e.g*., base station 120, base station 804), assigns air interface resources used by the source SC-UE (*e.g*., SC-UE 708) that provides the secondary cell to the first group of UEs.

At 1425, the base station determines to perform an SC-UE handover that disconnects the first UE from the source SC-UE that provides a first secondary cell to the first BUDC group and connects the first UE to a target SC-UE that provides a second secondary cell to a second BUDC group. For instance, the base station (*e.g*., base station 120, base station 804) determines to perform an SC-UE handover of the first UE (*e.g*., UE 710) that moves the UE from the first BUDC group (*e.g*., BUDC group 704) to the second BUDC group (*e.g*., BUDC group 706). Alternatively or additionally, the base station determines to perform a dual-BUDC handover.

In implementations, the base station receives one or more metrics and/or characteristics from the first UE and determines to perform the SC-UE handover based on the one or more metrics. As one example, the one or more metrics include a location of the first UE, and the base station determines to perform the SC-UE handover based on the location, such as when the location indicates that the first UE has move a predefined threshold away from the source SC-UE. As another example, the one or more metrics include a signal strength and the base station determines to perform the SC-UE handover based on the signal strength, such as when an uplink signal strength has fallen below a predetermined threshold. In various implementations, the base station receives the one or more metrics in response to requesting the metrics, such as by requesting measurements from the first UE. Alternatively or additionally, the base station receives the characteristics in response to requesting the characteristics (*e.g*., requesting UE capabilities). In some implementations, the base station receives a communication from the source SC-UE to perform the SC-UE handover.

In determining to perform the dual BUDC-handover, the base station sometimes communicates with a second base station that provides a second primary cell to the second BUDC to negotiate the SC-UE handover, such as in dual BUDC-handover scenarios. For example, the base station (*e.g*., base station 804) communicates with the second base station (*e.g*., base station 806) to negotiate the dual-BUDC handover.

At 1430, the base station directs the source SC-UE to release the first UE from the first BUDC group. The base station (*e.g*., base station 120, base station 804), as one example, directs the source SC-UE (*e.g*., SC-UE 708) to release the first UE (*e.g.*, UE 710) from the first BUDC group (*e.g*., BUDC group 704), such as by sending layer-3 messages to the source SC-UE (*e.g*., SC-UE 708). In some implementations, the base station also directs the first UE to perform the SC-UE handover, such as by directing the first UE to connect to a target SC-UE (*e.g*., SC-UE 714) and/or to connect to a second base station (*e.g*., base station 806).

At 1435, the base station communicates control-plane information or user-plane data with one or more UEs in the first group of UEs that remain in the first BUDC group, where the source SC-UE remains in the first BUDC group and acts as a secondary cell to the first BUDC group. The base station (*e.g*., base station 120, base station 804), as one example, communicates control-plane information or user-plane data with one or more UEs that remain in the first BUDC group (*e.g*., BUDC group 704). In some scenarios, such as when the base station acts as a primary cell to both the first BUDC group and the second BUDC group as described with reference to FIG. 7, the base station also communicates with the first UE using air interface resources assigned to the second BUDC group. In other scenarios, the base station disconnects from the first UE, such as that described with reference to FIG. 8.

Although aspects of secondary cell-user equipment handovers have been described in language specific to features and/or methods, the subject of the appended claims is not necessarily limited to the specific features or methods described. Rather, the specific features and methods are disclosed as example implementations of secondary cell-user equipment handovers, and other equivalent features and methods are intended to be within the scope of the appended claims.

## Claims

1. A method performed by a first user equipment, UE, configured as a source secondary cell-user equipment, SC-UE (708), for a first base station-user equipment dual connectivity, BUDC, group (704), the first BUDC group comprising the source SC-UE (708) and one or more UEs including a second UE, the source SC-UE and each of the one or more UEs communicating with a base station (120) associated with the first BUDC group (704) providing a primary cell to the first BUDC group (704), the method comprising:
providing, by the source SC-UE (708), a first secondary cell to the one or more UEs by scheduling air interface resources (302) for communications in the first BUDC group (704) that use the first secondary cell;
receiving, at the source SC-UE (708) and from the base station (120), an indication to release, from the first BUDC group (704), the second UE; and
releasing the second UE from the first BUDC group (704).

2. The method as recited in claim 1, wherein releasing the second UE from the first BUDC group (704) comprises:
ceasing to allocate air interface resources (302) of the first secondary cell to the second UE.

3. The method as recited in claim 1 or claim 2, the method further comprising:
providing the first secondary cell to one or more UEs that remain in the first BUDC group (704).

4. The method as recited in any one of the preceding claims, further comprising:
determining to move the second UE to a second BUDC group (706) based on at least one of: a location of the second UE or a signal strength associated with the second UE; or determining to move the second UE to the second BUDC group (706) by receiving a second indication from the base station (120) that directs the source SC-UE (708) to perform an SC-UE handover of the second UE to a target SC-UE (714) included in the second BUDC group (706) and sending, by the source SC-UE (708), an SC-UE handover command to the second UE that directs the second UE to connect to the target SC-UE (714).

5. The method as recited in claim 4, further comprising:
based on sending the SC-UE handover command to the second UE that directs the second UE to connect to the target SC-UE (714), forwarding data intended for the second UE to the target SC-UE (714).

6. The method as recited in claim 5, wherein the forwarding data intended for the second UE to the target SC-UE (714) comprises:
forwarding the data intended for the second UE to the target SC-UE (714) by forwarding the data through the base station (120); or
forwarding the data to the target SC-UE (714) using air interface resources (302) allocated by the base station (120), wherein the base station acts (120) as a primary cell to the source SC-UE (708) and the target SC-UE (714).

7. The method as recited in claim 4, wherein a target base station (806) provides a primary cell for the second BUDC group (706) and the target SC-UE (714) provides a secondary cell for the second BUDC group (706).

8. A method performed by a user equipment, UE (710), operating in a first base station-user equipment dual connectivity, BUDC, group (704), the first BUDC group (704) comprising a source secondary cell-user equipment, SC-UE (708), and one or more UEs, a first base station (120; 804) associated with the first BUDC group (704) providing a first primary cell to the first BUDC group (704), and the source SC-UE (708) providing a first secondary cell to the first BUDC group (704), the method comprising:
maintaining a dual connection that includes a first connection with the first base station (120; 804), and a second connection with the source SC-UE (708);
communicating using one or more air interface resources (302) assigned to the UE (710) by the source SC-UE (708);
receiving an SC-UE handover command that directs the UE (710) to disconnect from the source SC-UE (708) and connect to a target SC-UE (714) that provides a second secondary cell to a second BUDC group (706); and
disconnecting from the source SC-UE (708).

9. The method as recited in claim 8, further comprising:
maintaining the first connection to the first base station (120) after connecting to the target SC-UE (714); or
disconnecting with the first base station (804) and connecting to a second base station (806) that acts as a second primary cell to the second BUDC group (706).

10. The method as recited in claim 8 or claim 9, wherein receiving the SC-UE handover command comprises:
receiving the SC-UE handover command from the source SC-UE (708); or
receiving the SC-UE handover command from the first base station (120; 804).

11. The method as recited in any one of claims 8 to 10, wherein communicating using the one or more air interface resources (302) assigned to the UE (710) by the source SC-UE (708) comprises at least one of:
using a first carrier frequency to communicate in the first secondary cell; or
using a first timeslot to communicate using the first BUDC group (704), and
wherein communicating using one or more air interface resources (302) assigned to the UE by the target SC-UE (714) comprises at least one of:
using a second carrier frequency to communicate in the second secondary cell; or
using a second timeslot to communicate using the second BUDC group (706).

12. The method as recited in any one of claims 8 to 11, further comprising:
connecting to the target SC-UE (714); and communicating using one or more air interface resources (302) assigned to the UE (710) by the target SC-UE (714).

13. A user equipment apparatus (110) comprising:
at least one wireless transceiver (206, 208, 210);
a processor (214); and
computer-readable storage media (216) comprising instructions, responsive to execution by the processor (214), for directing the user equipment apparatus (110) to perform any one method as recited in claims 1 to 12 and using the at least one wireless transceiver (206, 208, 210).

14. A method performed by a base station (120; 804) to perform a secondary cell-user equipment, SC-UE, handover of a first user equipment, UE (710), that moves the first UE (710) from a first base station-user equipment dual connectivity, BUDC, group (704) to a second BUDC group (706), the first BUDC group (704) comprising a source SC-UE (708) and one or more UEs including the first UE (710), and the source SC-UE (708) providing a first secondary cell to the first BUDC group (704), the method comprising:
providing, as a primary cell, primary cell services to the first BUDC group (704);
determining to perform the SC-UE handover of the first UE (710) that disconnects the first UE (710) from the source SC-UE (708) and connects the first UE (710) to a target SC-UE (714) that provides a second secondary cell to the second BUDC group (706);
directing the source SC-UE (704) to release the first UE (710) from the first BUDC group (704); and
communicating, as the primary cell, control-plane information or user-plane data with one or more UEs that remain in the first BUDC group (704).

15. The method as recited in claim 14, further comprising at least one of:
directing the target SC-UE (714) to add the first UE (710) to the second BUDC group (706); or
receiving one or more metrics from the first UE (710) and determining to perform the SC-UE handover based on the one or more metrics.

16. A base station apparatus (120) comprising:
at least one wireless transceiver (256, 258, 260);
a processor (262); and
computer-readable storage media (264) comprising instructions, responsive to execution by the processor (262), for directing the base station apparatus (120) to perform any one method as recited in claim 14 or claim 15 and using the at least one wireless transceiver (256, 258, 260).

## Patentansprüche

1. Verfahren, durchgeführt von einem ersten Benutzergerät, UE, das als Quell-Sekundärzellen-Benutzergerät, SC-UE (708), für eine erste Basisstations-Benutzergerät-Dual-Konnektivitäts-, BUDC-, Gruppe (704) konfiguriert ist, wobei die erste BUDC-Gruppe das Quell-SC-UE (708) und ein oder mehrere UEs einschließlich eines zweiten UE umfasst, wobei das Quell-SC-UE und jedes der ein oder mehreren UEs mit einer mit der ersten BUDC-Gruppe (704) assoziierten Basisstation (120) kommuniziert, die eine Primärzelle für die erste BUDC-Gruppe (704) bereitstellt, wobei das Verfahren Folgendes umfasst:
Bereitstellen, durch das Quell-SC-UE (708), einer ersten Sekundärzelle für die ein oder mehreren UEs durch Planen von Luftschnittstellenressourcen (302) für Kommunikationen in der die erste Sekundärzelle verwendenden ersten BUDC-Gruppe (704);
Empfangen, am Quell-SC-UE (708) und von der Basisstation (120), einer Angabe zum Freigeben des zweiten UE aus der ersten BUDC-Gruppe (704); und
Freigeben des zweiten UE aus der ersten BUDC-Gruppe (704).

2. Verfahren nach Anspruch 1, wobei das Freigeben des zweiten UE aus der ersten BUDC-Gruppe (704) Folgendes umfasst:
Beenden der Zuweisung von Luftschnittstellenressourcen (302) der ersten Sekundärzelle an das zweite UE.

3. Verfahren nach Anspruch 1 oder Anspruch 2, wobei das Verfahren ferner Folgendes umfasst:
Bereitstellen der ersten Sekundärzelle für ein oder mehrere UEs, die in der ersten BUDC-Gruppe (704) verbleiben.

4. Verfahren nach einem der vorhergehenden Ansprüche, das ferner Folgendes umfasst:
Bestimmen, das zweite UE in eine zweite BUDC-Gruppe (706) zu verlagern, auf der Basis von mindestens einem von: einem Standort des zweiten UE oder einer mit dem zweiten UE assoziierten Signal stärke; oder
Bestimmen, das zweite UE in die zweite BUDC-Gruppe (706) zu verlagern, durch Empfangen einer zweiten Angabe von der Basisstation (120), die das Quell-SC-UE (708) zum Durchführen eines SC-UE-Handover des zweiten UE zu einer in der zweiten BUDC-Gruppe (706) eingeschlossenen Ziel-SC-UE (714) anweist, und durch Senden, durch das Quell-SC-UE (708), eines SC-UE-Handover-Befehls zum zweiten UE, der das zweite UE zum Verbinden mit dem Ziel-SC-UE (714) anweist.

5. Verfahren nach Anspruch 4, das ferner Folgendes umfasst:
Weiterleiten, auf der Basis des Sendens des SC-UE-Handover-Befehls zum zweiten UE, der das zweite UE zum Verbinden mit dem Ziel-SC-UE (714) anweist, von für das zweite UE bestimmten Daten zum Ziel-SC-UE (714).

6. Verfahren nach Anspruch 5, wobei das Weiterleiten von für das zweite UE bestimmten Daten an das Ziel-SC-UE (714) Folgendes umfasst:
Weiterleiten der für das zweite UE bestimmten Daten an das Ziel-SC-UE (714) durch Weiterleiten der Daten über die Basisstation (120); oder
Weiterleiten der Daten an das Ziel-SC-UE (714) unter Verwendung der von der Basisstation (120) zugewiesenen Luftschnittstellenressourcen (302), wobei die Basisstation (120) als Primärzelle für das Quell-SC-UE (708) und das Ziel-SC-UE (714) fungiert.

7. Verfahren nach Anspruch 4, wobei eine Ziel-Basisstation (806) eine Primärzelle für die zweite BUDC-Gruppe (706) bereitstellt und das Ziel-SC-UE (714) eine Sekundärzelle für die zweite BUDC-Gruppe (706) bereitstellt.

8. Verfahren, durchgeführt von einem Benutzergerät, UE (710), das in einer ersten Basisstations-Benutzergerät-Dual-Konnektivitäts-, BUDC-, Gruppe (704) arbeitet, wobei die erste BUDC-Gruppe (704) ein Quell-Sekundärzellen-Benutzergerät, SC-UE (708), und ein oder mehrere UEs umfasst, wobei eine mit der ersten BUDC-Gruppe (704) assoziierte erste Basisstation (120; 804) eine erste Primärzelle für die erste BUDC-Gruppe (704) bereitstellt und das Quell-SC-UE (708) eine erste Sekundärzelle für die erste BUDC-Gruppe (704) bereitstellt, wobei das Verfahren Folgendes umfasst:
Aufrechterhalten einer dualen Verbindung, die eine erste Verbindung mit der ersten Basisstation (120; 804) und eine zweite Verbindung mit dem Quell-SC-UE (708) einschließt;
Kommunizieren unter Verwendung einer oder mehrerer dem UE (710) durch das Quell-SC-UE (708) zugewiesenen Luftschnittstellenressourcen (302);
Empfangen eines SC-UE-Handover-Befehls, der das UE (710) zum Trennen von dem Quell-SC-UE (708) und zum Verbinden mit einem Ziel-SC-UE (714) anweist, das eine zweite Sekundärzelle für eine zweite BUDC-Gruppe (706) bereitstellt; und
Trennen vom Quell-SC-UE (708).

9. Verfahren nach Anspruch 8, das ferner Folgendes umfasst:
Aufrechterhalten der ersten Verbindung mit der ersten Basisstation (120) nach dem Verbinden mit dem Ziel-SC-UE (714); oder
Trennen von der ersten Basisstation (804) und Verbinden mit einer zweiten Basisstation (806), die als zweite Primärzelle für die zweite BUDC-Gruppe (706) fungiert.

10. Verfahren nach Anspruch 8 oder Anspruch 9, wobei das Empfangen des SC-UE-Handover-Befehls Folgendes umfasst:
Empfangen des SC-UE-Handover-Befehls vom Quell-SC-UE (708); oder
Empfangen des SC-UE-Handover-Befehls von der ersten Basisstation (120; 804).

11. Verfahren nach einem der Ansprüche 8 bis 10, wobei das Kommunizieren unter Verwendung der ein oder mehreren dem UE (710) vom Quell-SC-UE (708) zugewiesenen Luftschnittstellenressourcen (302) mindestens eines von Folgendem umfasst:
Verwenden einer ersten Trägerfrequenz zum Kommunizieren in der ersten Sekundärzelle; oder
Verwenden eines ersten Zeitschlitzes zum Kommunizieren unter Verwendung der ersten BUDC-Gruppe (704), und
wobei das Kommunizieren unter Verwendung einer oder mehrerer dem UE durch den Ziel-SC-UE (714) zugewiesenen Luftschnittstellenressourcen (302) mindestens eines von Folgendem umfasst:
Verwenden einer zweiten Trägerfrequenz zum Kommunizieren in der zweiten Sekundärzelle; und
Verwenden eines zweiten Zeitschlitzes zum Kommunizieren unter Verwendung der zweiten BUDC-Gruppe (706).

12. Verfahren nach einem der Ansprüche 8 bis 11, das ferner Folgendes umfasst:
Verbinden mit dem Ziel-SC-UE (714); und Kommunizieren unter Verwendung einer oder mehrerer dem UE (710) vom Ziel-SC-UE (714) zugewiesenen Luftschnittstellenressourcen (302).

13. Benutzergerätevorrichtung (110), die Folgendes umfasst:
mindestens einen drahtlosen Transceiver (206, 208, 210);
einen Prozessor (214); und
ein computerlesbares Speichermedium (216), das Befehle umfasst, die auf die Ausführung durch den Prozessor (214) reagieren, um die Benutzergerätevorrichtung (110) zum Durchführen eines Verfahrens nach den Ansprüchen 1 bis 12 und unter Verwendung des mindestens einen drahtlosen Transceivers (206, 208, 210) anzuweisen.

14. Verfahren, durchgeführt von einer Basisstation (120; 804) zum Durchführen eines Sekundärzellen-Benutzergerät-, SC-UE-, Handovers eines ersten Benutzergeräts, UE (710), der das erste UE (710) von einer ersten Basisstations-Benutzergerät-Dual-Konnektivitäts-, BUDC-, Gruppe (704) zu einer zweiten BUDC-Gruppe (706) verlagert, wobei die erste BUDC-Gruppe (704) ein Quell-SC-UE (708) und ein oder mehrere UEs einschließlich des ersten UE (710) umfasst und das Quell-SC-UE (708) eine erste Sekundärzelle für die erste BUDC-Gruppe (704) bereitstellt, wobei das Verfahren Folgendes umfasst:
Bereitstellen, als eine Primärzelle, von Primärzellendiensten für die erste BUDC-Gruppe (704);
Bestimmen des Durchführens des SC-UE-Handover des ersten UE (710), der das erste UE (710) vom Quell-SC-UE (708) trennt und das erste UE (710) mit einem Ziel-SC-UE (714) verbindet, der eine zweite Sekundärzelle für die zweite BUDC-Gruppe (706) bereitstellt;
Anweisen des Quell-SC-UE (704) zum Freigeben des ersten UE (710) aus der ersten BUDC-Gruppe (704); und
Kommunizieren, als die Primärzelle, von Steuerebeneninformationen oder Benutzerebenendaten mit einem oder mehreren UEs, die in der ersten BUDC-Gruppe (704) verbleiben.

15. Verfahren nach Anspruch 14, das ferner mindestens eines von Folgendem umfasst:
Anweisen des Ziel-SC-UE (714) zum Hinzufügen des ersten UE (710) zur zweiten BUDC-Gruppe (706); oder
Empfangen einer oder mehrerer Metriken vom ersten UE (710) und Bestimmen des Durchführens des SC-UE-Handover auf der Basis der ein oder mehreren Metriken.

16. Basisstationsvorrichtung (120), die Folgendes umfasst:
mindestens einen drahtlosen Transceiver (256, 258, 260);
einen Prozessor (262); und
ein computerlesbares Speichermedium (264), das Befehle umfasst, die auf die Ausführung durch den Prozessor (262) ansprechen, um die Basisstationsvorrichtung (120) zum Durchführen eines Verfahrens nach Anspruch 14 oder Anspruch 15 und unter Verwendung des mindestens einen drahtlosen Transceivers (256, 258, 260) anzuweisen.

## Revendications

1. Procédé réalisé par un premier équipement utilisateur, UE, configuré comme un équipement d'utilisateur de cellule secondaire source, SC-UE (708), pour un premier groupe à double connectivité de l'équipement utilisateur de station de base, BUDC, (704), le premier groupe BUDC comprenant le SC-UE source (708) et un ou plusieurs UE incluant un deuxième UE, le SC-UE source et chacun des un ou plusieurs UE communiquant avec une station de base (120) associée au premier groupe BUDC (704) fournissant une cellule primaire au premier groupe BUDC (704), le procédé comprenant :
la fourniture, par le SC-UE source (708), d'une première cellule secondaire à l'un ou plusieurs UE en programmant des ressources d'interface radio (302) pour communiquer dans le premier groupe BUDC (704) qui utilise la première cellule secondaire ;
la réception, au SC-UE source (708) et depuis la station de base (120), d'une indication pour libérer le deuxième UE du premier groupe BUDC (704) ; et
la libération du deuxième UE du premier groupe BUDC (704).

2. Procédé selon la revendication 1, dans lequel la libération du deuxième UE du premier groupe BUDC (704) comprend :
la cessation d'attribution de ressources d'interface radio (302) de la première cellule secondaire au deuxième UE.

3. Procédé selon la revendication 1 ou la revendication 2, le procédé comprenant en outre :
la fourniture de la première cellule secondaire à un ou plusieurs UE qui restent dans le premier groupe BUDC (704).

4. Procédé selon l'une quelconque des revendications précédentes, comprenant en outre :
la détermination de déplacer le deuxième UE à un deuxième groupe BUDC (706) sur la base d'au moins un parmi : un emplacement du deuxième UE ou une force de signal associée au deuxième UE ; ou
la détermination de déplacer le deuxième UE au deuxième groupe BUDC (706) en recevant une deuxième indication de la station de base (120) qui donne l'instruction au SC-UE source (708) de réaliser un transfert de SC-UE du deuxième UE à un SC-UE cible (714) inclus dans le deuxième groupe BUDC (706) et en envoyant, par le SC-UE source (708), une commande de transfert de SC-UE au deuxième UE qui donne l'instruction au deuxième UE de se connecter au SC-UE cible (714).

5. Procédé selon la revendication 4, comprenant en outre :
sur la base de l'envoi de la commande de transfert de SC-UE au deuxième UE qui donne l'instruction au deuxième UE de se connecter au SC-UE cible (714), la transmission de données destinées au deuxième UE au SC-UE cible (714).

6. Procédé selon la revendication 5, dans lequel la transmission de données destinées au deuxième UE au SC-UE cible (714) comprend :
la transmission des données destinées au deuxième UE au SC-UE cible (714) en transmettant les données à travers la station de base (120) ; ou
la transmission des données au SC-UE cible (714) en utilisant des ressources d'interface radio (302) attribuées par la station de base (120), dans lequel la station de base agit (120) comme une cellule primaire au SC-UE source (708) et au SC-UE cible (714).

7. Procédé selon la revendication 4, dans lequel une station de base cible (806) fournit une cellule primaire pour le deuxième groupe BUDC (706) et le SC-UE cible (714) fournit une cellule secondaire pour le deuxième groupe BUDC (706).

8. Procédé réalisé par un équipement utilisateur, UE (710), fonctionnant dans un premier groupe à double connectivité d'équipement utilisateur de station de base, BUDC (704), le premier groupe BUDC (704) comprenant un équipement utilisateur de cellule secondaire source, SC-UE (708), et un ou plusieurs UE, une première station de base (120 ; 804) associée au premier groupe BUDC (704) fournissant une première cellule primaire au premier groupe BUDC (704), et le SC-UE source (708) fournissant une première cellule secondaire au premier groupe BUDC (704), le procédé comprenant :
le maintien d'une double connexion qui inclut une première connexion à la première station de base (120 ; 804), et une deuxième connexion au SC-UE source (708) ;
la communication en utilisant une ou plusieurs ressources d'interface radio (302) attribuées à l'UE (710) par le SC-UE source (708) ;
la réception d'une commande de transfert SC-UE qui donne l'instruction à l'UE (710) de se déconnecter du SC-UE source (708) et de se connecter à un SC-UE cible (714) qui fournit une deuxième cellule secondaire à un deuxième groupe BUDC (706) ; et la déconnexion du SC-UE source (708).

9. Procédé selon la revendication 8, comprenant en outre :
le maintien de la première connexion à la première station de base (120) après connexion au SC-UE cible (714) ; ou
la déconnexion de la première station de base (804) et la connexion à une deuxième station de base (806) qui agit en tant que deuxième cellule primaire au deuxième groupe BUDC (706).

10. Procédé selon la revendication 8 ou la revendication 9, dans lequel la réception de la commande de transfert SC-UE comprend :
la réception de la commande de transfert de SC-UE du SC-UE source (708) ; ou
la réception de la commande de transfert de SC-UE de la première station de base (120 ; 804).

11. Procédé selon l'une quelconque des revendications 8 à 10, dans lequel la communication en utilisant les une ou plusieurs ressources d'interface radio (302) attribuées à l'UE (710) par le SC-UE source (708) comprend au moins un élément parmi :
l'utilisation d'une première fréquence porteuse pour communiquer dans la première cellule secondaire ; ou
l'utilisation d'un premier créneau pour communiquer en utilisant le premier groupe BUDC (704), et
dans lequel la communication en utilisant une ou plusieurs ressources d'interface radio (302) attribuées à l'UE par le SC-UE cible (714) comprend au moins une parmi :
l'utilisation d'une deuxième fréquence porteuse pour communiquer dans la deuxième cellule secondaire ; ou
l'utilisation d'un deuxième créneau pour communiquer en utilisant le deuxième groupe BUDC (706).

12. Procédé selon l'une quelconque des revendications 8 à 11, comprenant en outre :
la connexion au SC-UE cible (714) ; et la communication en utilisant une ou plusieurs ressources d'interface radio (302) attribuées à l'UE (710) par le SC-UE cible (714).

13. Appareil d'équipement utilisateur (110) comprenant :
au moins un émetteur-récepteur sans fil (206, 208, 210) ;
un processeur (214) ; et
un support de stockage lisible sur ordinateur (216) comprenant des instructions, réagissant à l'exécution par le processeur (214), pour donner l'instruction à l'appareil de l'équipement utilisateur (110) de réaliser un procédé selon les revendications 1 à 12 et en utilisant l'au moins un émetteur-récepteur sans fil (206, 208, 210).

14. Procédé réalisé par une station de base (120 ; 804) pour réaliser un transfert d'un équipement utilisateur de cellule secondaire, SC-UE, d'un premier équipement utilisateur, UE (710), qui déplace le premier UE (710) d'un premier groupe à double connectivité d'équipement utilisateur de station de base, BUDC (704) à un deuxième groupe BUDC (706), le premier groupe BUDC (704) comprenant un SC-UE source (708) et un ou plusieurs UE incluant le premier UE (710), et le SC-UE source (708) fournissant une première cellule secondaire au premier groupe BUDC (704), le procédé comprenant :
la fourniture, comme cellule primaire, de services de cellule primaire au premier groupe BUDC (704) ;
la détermination de réaliser le transfert de SC-UE du premier UE (710) qui déconnecte le premier UE (710) du SC-UE source (708) et connecte le premier UE (710) à un SC-UE cible (714) qui fournit une deuxième cellule secondaire au deuxième groupe BUDC (706) ;
l'instruction au SC-UE source (704) de libérer le premier UE (710) du premier groupe BUDC (704) ; et
la communication, comme cellule primaire, d'informations de plan de contrôle ou de données de plan d'utilisateur avec un ou plusieurs UE qui restent dans le premier groupe BUDC (704).

15. Procédé selon la revendication 14, comprenant en outre au moins une parmi :
l'instruction au SC-UE cible (714) d'ajouter le premier UE (710) au deuxième groupe BUDC (706) ; ou
la réception d'une ou plusieurs mesures du premier UE (710) et la détermination de réaliser le transfert de SC-UE sur la base des une ou plusieurs mesures.

16. Appareil de station de base (120) comprenant :
au moins un émetteur-récepteur sans fil (256, 258, 260) ;
un processeur (262) ; et
un support de stockage lisible sur ordinateur (264) comprenant des instructions, réagissant à l'exécution par le processeur (262), pour donner l'instruction à l'appareil de station de base (120) de réaliser l'un quelconque des procédés selon la revendication 14 ou selon la revendication 15, et en utilisant l'au moins un émetteur-récepteur sans fil (256, 258, 260).
